# EUROPEAN PATENT SPECIFICATION

(11) **EP 3 861 842 B1**
(45) Date of publication and mention of the grant of the patent: **16.08.2023**
(21) Application number: 21151611.7
(22) Date of filing: 14.01.2021
(51) Int. Cl.: A01B 79/00, A01D 41/127

(54) **PREDICTIVE WEED MAP GENERATION AND CONTROL SYSTEM**
SYSTEM ZUR ERZEUGUNG EINER PRÄDIKTIVEN UNKRAUTKARTE UND ZUR STEUERUNG
SYSTÈME DE GÉNÉRATION DE CARTE DE MAUVAISES HERBES PRÉDICTIVE ET DE COMMANDE

(30) Priority: 08.10.2020 US 202017066444; 09.10.2020 US 202017067383
(43) Date of publication of application: 11.08.2021
(73) Proprietor: Deere & Company, Moline, IL 61265 (US)
(72) Inventor: Vandike, Nathan R., 68163 Mannheim (DE); Palla, Bhanu Kiran Reddy, 68163 Mannheim (DE); Anderson, Noel W., 68163 Mannheim (DE)
(74) Representative: Holst, Sönke

(56) References cited:
- WO-A1-2017/004074
- CN-A- 110 135 341
- US-A- 5 995 895
- US-B2- 10 115 158

## Description

The present description relates to agricultural harvesting machines.

### BACKGROUND

There are a wide variety of different types of agricultural machines. Some agricultural machines include harvesters, such as combine harvesters, sugar cane harvesters, cotton harvesters, self-propelled forage harvesters, and windrowers. Some harvester can also be fitted with different types of heads to harvest different types of crops.

Weed patches in fields have a number of deleterious effects on the harvesting operation. For instance, when a harvester encounters a weed patch in a field, the weed patch may impede machine performance or degrade the performance of the harvester. Therefore, an operator may attempt to modify control of the harvester, upon encountering a weed patch during the harvesting operation.

US 5 995 895 A describes an automatic control of a harvesting machine. A field is remotely sensed to provide a geo-referenced map of crop conditions like an anticipated yield map, which can include data like topographical data (slopes), anticipated yield, total crop-mass flow, moisture content and other crop data as insect or weed infestation or chemicals. This map is used, during harvesting, for an automatic, predictive control of operating parameters a combine, like speed, threshing rotor speed and concave clearance, sieve opening and cleaning fan speed. Local sensors on the combine are used to calibrate the data from the map.

WO 2017/004074 A1 describes a system for capturing images of a field during plant growth, the images being processed to generate a localized view map layers for viewing the field during crop development.

US 10 115 158 B2 describes a method for generating recommendations for increasing the value of a crop. Prescriptions can be based on NDVI images from remote sensors, with ground data used for removing an unknown bias or offset of aerial images to make them comparable. Weeds infections on a field can be sensed and input into a database.

CN 110582198 A shows a harvester with a camera looking to the field in front of the combine and detecting weeds and automatic control of the combine threshing gap once weeds are assumed to pass through the combine.

### SUMMARY

The present invention is defined by the claims.

One or more information maps are obtained by an agricultural work machine. The one or more information maps map one or more agricultural characteristic values at different geographic locations of a field. An in-situ sensor on the agricultural work machine senses a different agricultural characteristic as the agricultural work machine moves through the field. A predictive map generator generates a predictive map that predicts a predictive agricultural characteristic at different locations in the field based on a relationship between the values in the one or more information maps and the agricultural characteristic sensed by the in-situ sensor. The predictive map can be output and used in automated machine control.

### BRIEF DESCRIPTION OF THE DRAWINGS

FIG. 1 is a partial pictorial, partial schematic illustration of one example of a combine harvester.
FIG. 2 is a block diagram showing some portions of an agricultural harvester in more detail, according to some examples of the present disclosure.
FIGS. 3A-3B (collectively referred to herein as FIG. 3) show a flow diagram illustrating an example of operation of an agricultural harvester in generating a map.
FIG. 4 is a block diagram showing one example of a predictive model generator and a predictive metric map generator.
FIG. 5 is a flow diagram showing an example of operation of an agricultural harvester in receiving a vegetative index map, detecting a weed characteristic, and generating a functional predictive weed map for use in controlling the agricultural harvester during a harvesting operation.
FIG. 6 is a block diagram showing one example of an agricultural harvester in communication with a remote server environment.
FIGS. 7-9 show examples of mobile devices that can be used in an agricultural harvester.
FIG. 10 is a block diagram showing one example of a computing environment that can be used in an agricultural harvester and the architectures illustrated in previous figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates.

The present description relates to using in-situ data taken concurrently with an agricultural operation, in combination with prior data, to generate a predictive map and, more particularly, a predictive weed map. In some examples, the predictive weed map can be used to control an agricultural work machine, such as an agricultural harvester. As discussed above, performance of a harvester may be degraded when the harvester engages a weed patch. For instance, if the crops have reached maturity, the weeds may still be green, thus increasing the moisture content of the biomass that is encountered by the harvester. This problem may be exacerbated when the weed patches are wet (such as shortly after a rainfall or when the weed patches contain dew) and before the weeds have had a chance to dry.

Performance of a harvester may be deleteriously affected based on a number of different criteria. For example, intensity of weeds in a weed patch may have deleterious effects on the operation of the harvester. Without limitation, weed intensity may include at least one of weed presence, weed population, weed growth stage, weed biomass, weed moisture, weed density, a height of weeds, a size of a weed plant, an age, or health condition of weeds at a location within an area. The measure of weed intensity may be a binary value (such as weed presence or weed absence), or a continuous value (such as a percentage of weeds in a defined area or volume) or a set of discrete values (such as low, medium, high weed, intensity values). Similarly, different types of weeds encountered by a harvester may affect the harvester differently. For example, different types of weeds may contain varying moisture levels, and, as the moisture levels of weeds increase, degradation in harvester performance may also increase. Similarly, different weed types may have different physical structures (e.g., some weeds may have thicker or thinner stalks, broader leaves, etc.). These variations in weed structure may also cause the performance of the harvester to vary when the harvester engages with such weeds.

A vegetative index map illustratively maps vegetative index values (which may be indicative of vegetative growth) across different geographic locations in a field of interest. One example of a vegetative index includes a normalized difference vegetation index (NDVI). There are many other vegetative indices that are within the scope of the present disclosure. In some examples, a vegetative index may be derived from sensor readings of one or more bands of electromagnetic radiation reflected by the plants. Without limitations, these bands may be in the microwave, infrared, visible or ultraviolet portions of the electromagnetic spectrum.

A vegetative index map can be used to identify the presence and location of vegetation. In some examples, these maps enable weeds to be identified and georeferenced in the presence of bare soil, crop residue, or other plants, including crop or other weeds. For instance, at the end of a growing season, when a crop is mature, the crop plants may show a relatively low level of live, growing vegetation. However, weeds often persist in a growing state after the maturity of the crop. Therefore, if a vegetative index map is generated relatively late in the growing season, the vegetative index map may be indicative of the location of weeds in the field. However, the vegetative index map may be less useful (or not at all useful) in identifying an intensity of weeds in the weed patch, or the types of weeds in the weed patch. Thus, in some instances, a vegetative index map may have a reduced usefulness in predicting how to control a harvester as it moves through the field.

The present discussion thus proceeds with respect to systems that receive a vegetative index map of a field or map generated during a prior operation and also use an in-situ sensor to detect a variable indicative of one or more of a weed location, weed intensity, and weed type, during a harvesting operation. In some instances, the in-situ sensor may detect a location of weeds, for example, along a width of a header attached to an agricultural harvester, such as agricultural harvester 100. For example, the in-situ sensor may detect the presence of weeds along a portion of a width of the header. The weed presence detected by the in-situ sensor can be used to identify one or more locations, such as locations along the header, where the weeds are present. The systems generate a model that models a relationship between the vegetative index values on the vegetative index map or the values on the map generated from the prior operation and the output values from the in-situ sensor. The model is used to generate a functional predictive weed map that predicts, for example, weed location, weed intensity, or weed type at different locations in the field. The functional predictive weed map, generated during the harvesting operation, can be presented to an operator or other user or used in automatically controlling a harvester during the harvesting operation, or both.

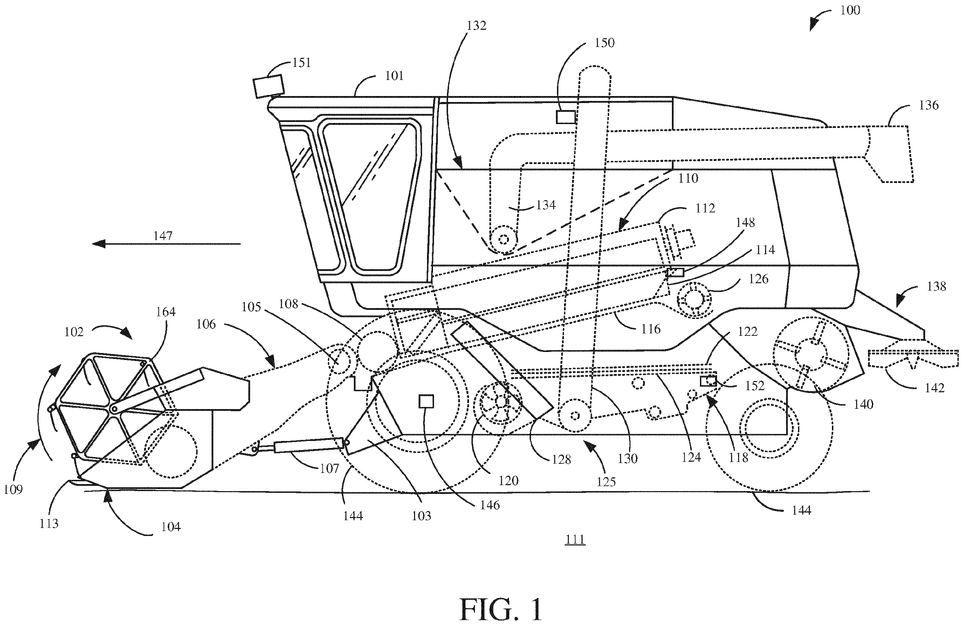

FIG. 1 is a partial pictorial, partial schematic, illustration of a self-propelled agricultural harvester 100. In the illustrated example, agricultural harvester 100 is a combine harvester. Further, although combine harvesters are provided as examples throughout the present disclosure, it will be appreciated that the present description is also applicable to other types of harvesters, such as cotton harvesters, sugarcane harvesters, self-propelled forage harvesters, windrowers, or other agricultural work machines. Consequently, the present disclosure is intended to encompass the various types of harvesters described and is, thus, not limited to combine harvesters. Moreover, the present disclosure is directed to other types of work machines, such as agricultural seeders and sprayers, construction equipment, forestry equipment, and turf management equipment where generation of a predictive map may be applicable. Consequently, the present disclosure is intended to encompass these various types of harvesters and other work machines and is, thus, not limited to combine harvesters.

As shown in FIG. 1, agricultural harvester 100 illustratively includes an operator compartment 101, which can have a variety of different operator interface mechanisms, for controlling agricultural harvester 100. Agricultural harvester 100 includes front-end equipment, such as a header 102, and a cutter generally indicated at 104. Agricultural harvester 100 also includes a feeder house 106, a feed accelerator 108, and a thresher generally indicated at 110. The feeder house 106 and the feed accelerator 108 form part of a material handling subsystem 125. Header 102 is pivotally coupled to a frame 103 of agricultural harvester 100 along pivot axis 105. One or more actuators 107 drive movement of header 102 about axis 105 in the direction generally indicated by arrow 109. Thus, a vertical position of header 102 (the header height) above ground 111 over which the header 102 travels is controllable by actuating actuator 107. While not shown in FIG. 1, agricultural harvester 100 may also include one or more actuators that operate to apply a tilt angle, a roll angle, or both to the header 102 or portions of header 102. Tilt refers to an angle at which the cutter 104 engages the crop. The tilt angle is increased, for example, by controlling header 102 to point a distal edge 113 of cutter 104 more toward the ground. The tilt angle is decreased by controlling header 102 to point the distal edge 113 of cutter 104 more away from the ground. The roll angle refers to the orientation of header 102 about the front-to-back longitudinal axis of agricultural harvester 100.

Thresher 110 illustratively includes a threshing rotor 112 and a set of concaves 114. Further, agricultural harvester 100 also includes a separator 116. Agricultural harvester 100 also includes a cleaning subsystem or cleaning shoe (collectively referred to as cleaning subsystem 118) that includes a cleaning fan 120, chaffer 122, and sieve 124. The material handling subsystem 125 also includes discharge beater 126, tailings elevator 128, clean grain elevator 130, as well as unloading auger 134 and spout 136. The clean grain elevator moves clean grain into clean grain tank 132. Agricultural harvester 100 also includes a residue subsystem 138 that can include chopper 140 and spreader 142. Agricultural harvester 100 also includes a propulsion subsystem that includes an engine that drives ground engaging components 144, such as wheels or tracks. In some examples, a combine harvester within the scope of the present disclosure may have more than one of any of the subsystems mentioned above. In some examples, agricultural harvester 100 may have left and right cleaning subsystems, separators, etc., which are not shown in FIG. 1.

In operation, and by way of overview, agricultural harvester 100 illustratively moves through a field in the direction indicated by arrow 147. As agricultural harvester 100 moves, header 102 (and the associated reel 164) engages the crop to be harvested and gathers the crop toward cutter 104. An operator of agricultural harvester 100 can be a local human operator, a remote human operator, or an automated system. An operator command is a command by an operator. The operator of agricultural harvester 100 may determine one or more of a height setting, a tilt angle setting, or a roll angle setting for header 102. For example, the operator inputs a setting or settings to a control system, described in more detail below, that controls actuator 107. The control system may also receive a setting from the operator for establishing the tilt angle and roll angle of the header 102 and implement the inputted settings by controlling associated actuators, not shown, that operate to change the tilt angle and roll angle of the header 102. The actuator 107 maintains header 102 at a height above ground 111 based on a height setting and, where applicable, at desired tilt and roll angles. Each of the height, roll, and tilt settings may be implemented independently of the others. The control system responds to header error (e.g., the difference between the height setting and measured height of header 104 above ground 111 and, in some examples, tilt angle and roll angle errors) with a responsiveness that is determined based on a selected sensitivity level. If the sensitivity level is set at a greater level of sensitivity, the control system responds to smaller header position errors, and attempts to reduce the detected errors more quickly than when the sensitivity is at a lower level of sensitivity.

Returning to the description of the operation of agricultural harvester 100, after crops are cut by cutter 104, the severed crop material is moved through a conveyor in feeder house 106 toward feed accelerator 108, which accelerates the crop material into thresher 110. The crop material is threshed by rotor 112 rotating the crop against concaves 114. The threshed crop material is moved by a separator rotor in separator 116 where a portion of the residue is moved by discharge beater 126 toward the residue subsystem 138. The portion of residue transferred to the residue subsystem 138 is chopped by residue chopper 140 and spread on the field by spreader 142. In other configurations, the residue is released from the agricultural harvester 100 in a windrow. In other examples, the residue subsystem 138 can include weed seed eliminators (not shown) such as seed baggers or other seed collectors, or seed crushers or other seed destroyers.

Grain falls to cleaning subsystem 118. Chaffer 122 separates some larger pieces of material from the grain, and sieve 124 separates some of finer pieces of material from the clean grain. Clean grain falls to an auger that moves the grain to an inlet end of clean grain elevator 130, and the clean grain elevator 130 moves the clean grain upwards, depositing the clean grain in clean grain tank 132. Residue is removed from the cleaning subsystem 118 by airflow generated by cleaning fan 120. Cleaning fan 120 directs air along an airflow path upwardly through the sieves and chaffers. The airflow carries residue rearwardly in agricultural harvester 100 toward the residue handling subsystem 138.

Tailings elevator 128 returns tailings to thresher 110 where the tailings are re-threshed. Alternatively, the tailings also may be passed to a separate re-threshing mechanism by a tailings elevator or another transport device where the tailings are re-threshed as well.

FIG. 1 also shows that, in one example, agricultural harvester 100 includes ground speed sensor 146, one or more separator loss sensors 148, a clean grain camera 150, a forward looking image capture mechanism 151, which may be in the form of a stereo or mono camera, and one or more loss sensors 152 provided in the cleaning subsystem 118.

Ground speed sensor 146 senses the travel speed of agricultural harvester 100 over the ground. Ground speed sensor 146 may sense the travel speed of the agricultural harvester 100 by sensing the speed of rotation of the ground engaging components (such as wheels or tracks), a drive shaft, an axel, or other components. In some instances, the travel speed may be sensed using a positioning system, such as a global positioning system (GPS), a dead reckoning system, a long range navigation (LORAN) system, or a wide variety of other systems or sensors that provide an indication of travel speed.

Loss sensors 152 illustratively provide an output signal indicative of the quantity of grain loss occurring in both the right and left sides of the cleaning subsystem 118. In some examples, sensors 152 are strike sensors which count grain strikes per unit of time or per unit of distance traveled to provide an indication of the grain loss occurring at the cleaning subsystem 118. The strike sensors for the right and left sides of the cleaning subsystem 118 may provide individual signals or a combined or aggregated signal. In some examples, sensors 152 may include a single sensor as opposed to separate sensors provided for each cleaning subsystem 118.

Separator loss sensor 148 provides a signal indicative of grain loss in the left and right separators, not separately shown in FIG. 1. The separator loss sensors 148 may be associated with the left and right separators and may provide separate grain loss signals or a combined or aggregate signal. In some instances, sensing grain loss in the separators may also be performed using a wide variety of different types of sensors as well.

Agricultural harvester 100 may also include other sensors and measurement mechanisms. For instance, agricultural harvester 100 may include one or more of the following sensors: a header height sensor that senses a height of header 102 above ground 111; stability sensors that sense oscillation or bouncing motion (and amplitude) of agricultural harvester 100; a residue setting sensor that is configured to sense whether agricultural harvester 100 is configured to chop the residue, produce a windrow, etc.; a cleaning shoe fan speed sensor to sense the speed of fan 120; a concave clearance sensor that senses clearance between the rotor 112 and concaves 114; a threshing rotor speed sensor that senses a rotor speed of rotor 112; a chaffer clearance sensor that senses the size of openings in chaffer 122; a sieve clearance sensor that senses the size of openings in sieve 124; a material other than grain (MOG) moisture sensor that senses a moisture level of the MOG passing through agricultural harvester 100; one or more machine setting sensors configured to sense various configurable settings of agricultural harvester 100; a machine orientation sensor that senses the orientation of agricultural harvester 100; and crop property sensors that sense a variety of different types of crop properties, such as crop type, crop moisture, and other crop properties. Crop property sensors may also be configured to sense characteristics of the severed crop material as the crop material is being processed by agricultural harvester 100. For example, in some instances, the crop property sensors may sense grain quality such as broken grain, MOG levels; grain constituents such as starches and protein; and grain feed rate as the grain travels through the feeder house 106, clean grain elevator 130, or elsewhere in the agricultural harvester 100. The crop property sensors may also sense the feed rate of biomass through feeder house 106, through the separator 116 or elsewhere in agricultural harvester 100. The crop property sensors may also sense the feed rate as a mass flow rate of grain through elevator 130 or through other portions of the agricultural harvester 100 or provide other output signals indicative of other sensed variables.

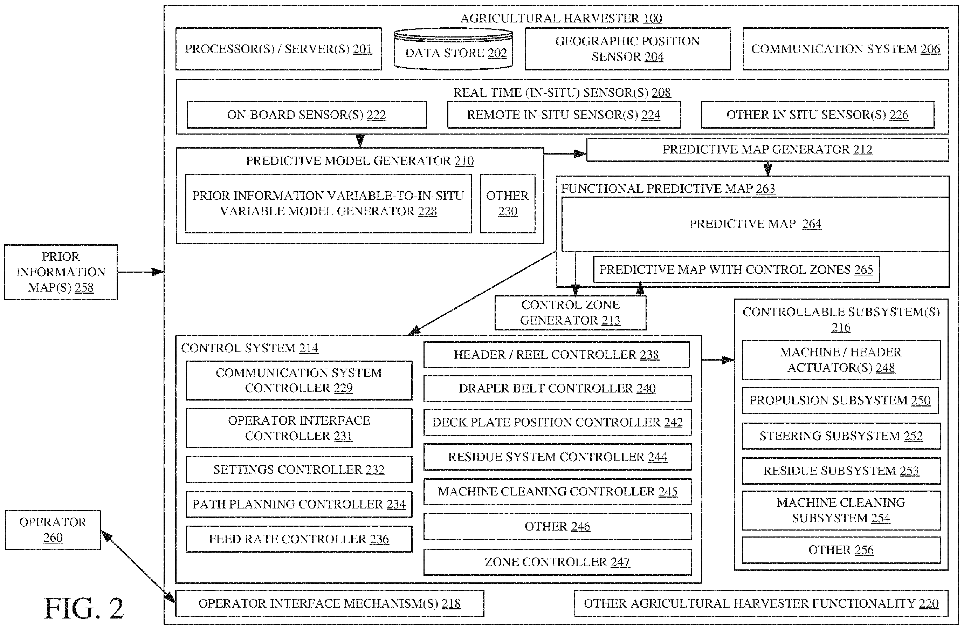

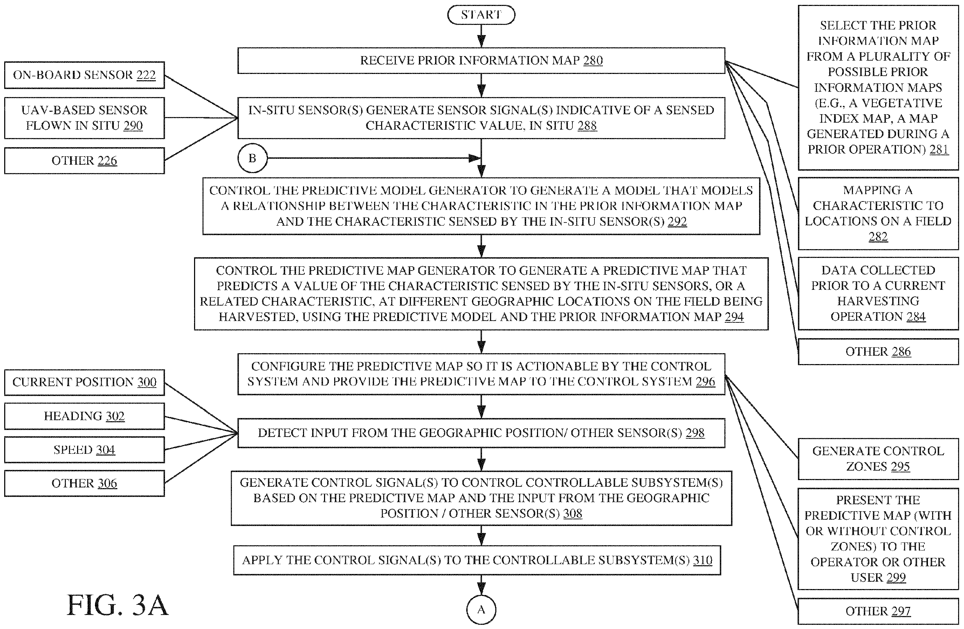

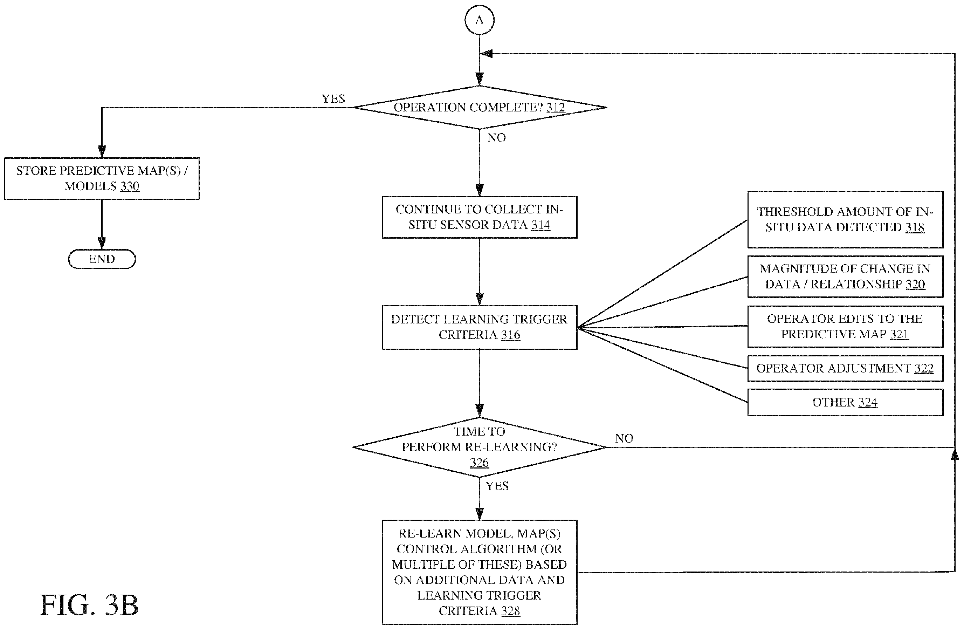

Prior to describing how agricultural harvester 100 generates a functional predictive weed map, and uses the functional predictive weed map for control, a brief description of some of the items on agricultural harvester 100, and their operation, will first be described. The description of FIG. 2 and 3 describe receiving a general type of prior information map and combining information from the prior information map with a georeferenced sensor signal generated by an in-situ sensor, where the sensor signal is indicative of a characteristic in the field, such as characteristics of crop or weeds present in the field. Characteristics of the field may include, but are not limited to, characteristics of a field such as slope, weed intensity, weed type, soil moisture, surface quality; characteristics of crop properties such as crop height, crop moisture, crop density, crop state; characteristics of grain properties such as grain moisture, grain size, grain test weight; and characteristics of machine performance such as loss levels, job quality, fuel consumption, and power utilization. A relationship between the characteristic values obtained from in-situ sensor signals and the prior information map values is identified, and that relationship is used to generate a new functional predictive map. A functional predictive map predicts values at different geographic locations in a field, and one or more of those values may be used for controlling a machine, such as one or more subsystems of an agricultural harvester. In some instances, a functional predictive map can be presented to a user, such as an operator of an agricultural work machine, which may be an agricultural harvester. A functional predictive map may be presented to a user visually, such as via a display, haptically, or audibly. The user may interact with the functional predictive map to perform editing operations and other user interface operations. In some instances, a functional predictive map can be used for one or more of controlling an agricultural work machine, such as an agricultural harvester, presentation to an operator or other user, and presentation to an operator or user for interaction by the operator or user.

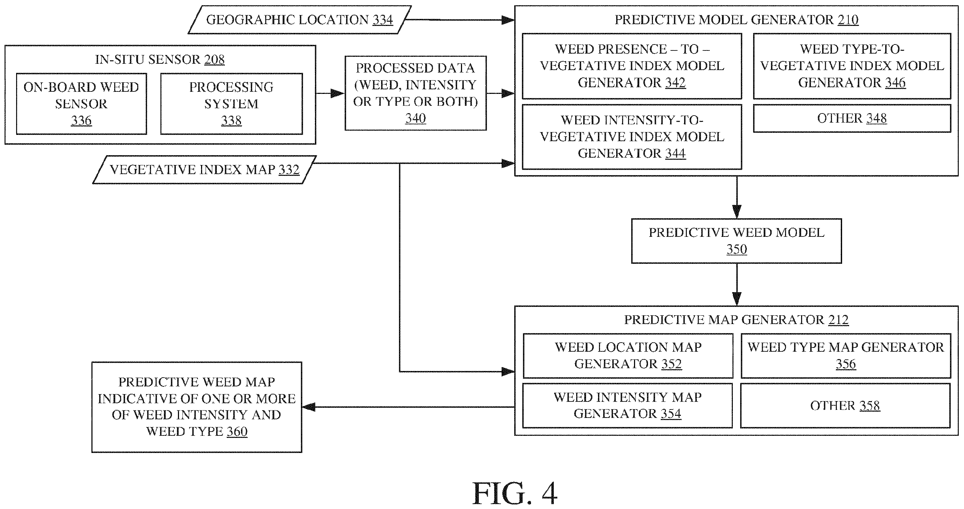

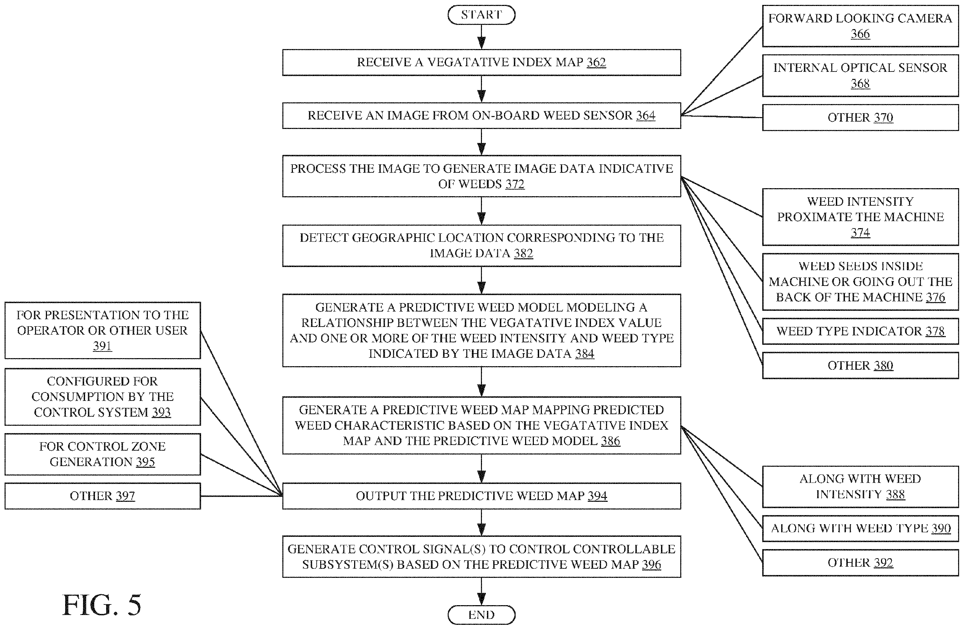

After the general approach is described with respect to FIGS. 2 and 3, a more specific approach for generating a functional predictive weed map that can be presented to an operator or user, or used to control agricultural harvester 100, or both is described with respect to FIGS. 4 and 5. Again, while the present discussion proceeds with respect to the agricultural harvester and, particularly, a combine harvester, the scope of the present disclosure encompasses other types of agricultural harvesters or other agricultural work machines.

FIG. 2 is a block diagram showing some portions of an example agricultural harvester 100. FIG. 2 shows that agricultural harvester 100 illustratively includes one or more processors or servers 201, data store 202, geographic position sensor 204, communication system 206, and one or more in-situ sensors 208 that sense one or more agricultural characteristics of a field concurrent with a harvesting operation. An agricultural characteristic can include any characteristic that can have an effect of the harvesting operation. Some examples of agricultural characteristics include characteristics of the harvesting machine, the field, the plants on the field, and the weather. Other types of agricultural characteristics are also included. The in-situ sensors 208 generate values corresponding to the sensed characteristics. The agricultural harvester 100 also includes a predictive model or relationship generator (collectively referred to hereinafter as "predictive model generator 210"), predictive map generator 212, control zone generator 213, control system 214, one or more controllable subsystems 216, and an operator interface mechanism 218. The agricultural harvester 100 can also include a wide variety of other agricultural harvester functionality 220. The in-situ sensors 208 include, for example, on-board sensors 222, remote sensors 224, and other sensors 226 that sense characteristics of a field during the course of an agricultural operation. Predictive model generator 210 illustratively includes a prior information variable-to-in-situ variable model generator 228, and predictive model generator 210 can include other items 230. Control system 214 includes communication system controller 229, operator interface controller 231, a settings controller 232, path planning controller 234, feed rate controller 236, header and reel controller 238, draper belt controller 240, deck plate position controller 242, residue system controller 244, machine cleaning controller 245, zone controller 247, and system 214 can include other items 246. Controllable subsystems 216 include machine and header actuators 248, propulsion subsystem 250, steering subsystem 252, residue subsystem 138, machine cleaning subsystem 254, and subsystems 216 can include a wide variety of other subsystems 256.

FIG. 2 also shows that agricultural harvester 100 can receive prior information map 258. As described below, the prior information map 258 includes, for example, a vegetative index map or a vegetation map from a prior operation. However, prior information map 258 may also encompass other types of data that were obtained prior to a harvesting operation or a map from a prior operation. FIG. 2 also shows that an operator 260 may operate the agricultural harvester 100. The operator 260 interacts with operator interface mechanisms 218. In some examples, operator interface mechanisms 218 may include joysticks, levers, a steering wheel, linkages, pedals, buttons, dials, keypads, user actuatable elements (such as icons, buttons, etc.) on a user interface display device, a microphone and speaker (where speech recognition and speech synthesis are provided), among a wide variety of other types of control devices. Where a touch sensitive display system is provided, operator 260 may interact with operator interface mechanisms 218 using touch gestures. These examples described above are provided as illustrative examples and are not intended to limit the scope of the present disclosure. Consequently, other types of operator interface mechanisms 218 may be used and are within the scope of the present disclosure.

Prior information map 258 may be downloaded onto agricultural harvester 100 and stored in data store 202, using communication system 206 or in other ways. In some examples, communication system 206 may be a cellular communication system, a system for communicating over a wide area network or a local area network, a system for communicating over a near field communication network, or a communication system configured to communicate over any of a variety of other networks or combinations of networks. Communication system 206 may also include a system that facilitates downloads or transfers of information to and from a secure digital (SD) card or a universal serial bus (USB) card or both.

Geographic position sensor 204 illustratively senses or detects the geographic position or location of agricultural harvester 100. Geographic position sensor 204 can include, but is not limited to, a global navigation satellite system (GNSS) receiver that receives signals from a GNSS satellite transmitter. Geographic position sensor 204 can also include a realtime kinematic (RTK) component that is configured to enhance the precision of position data derived from the GNSS signal. Geographic position sensor 204 can include a dead reckoning system, a cellular triangulation system, or any of a variety of other geographic position sensors.

In-situ sensors 208 may be any of the sensors described above with respect to FIG. 1. In-situ sensors 208 include on-board sensors 222 that are mounted on-board agricultural harvester 100. Such sensors may include, for instance, a perception sensor (e.g., a forward looking mono or stereo camera system and image processing system), image sensors that are internal to agricultural harvester 100 (such as the clean grain camera or cameras mounted to identify weed seeds that are exiting agricultural harvester 100 through the residue subsystem or from the cleaning subsystem). The in-situ sensors 208 also include remote in-situ sensors 224 that capture in-situ information. In-situ data include data taken from a sensor on-board the harvester or taken by any sensor where the data are detected during the harvesting operation.

Predictive model generator 210 generates a model that is indicative of a relationship between the values sensed by the in-situ sensor 208 and a metric mapped to the field by the prior information map 258. For example, if the prior information map 258 maps a vegetative index value to different locations in the field, and the in-situ sensor 208 is sensing a value indicative of weed intensity, then prior information variable-to-in-situ variable model generator 228 generates a predictive weed model that models the relationship between the vegetative index value and the weed intensity value. The predictive weed model can also be generated based on vegetative index values from the prior information map 258 and multiple in-situ data values generated by in-situ sensors 208. Then, predictive map generator 212 uses the predictive weed model generated by predictive model generator 210 to generate a functional predictive weed map that predicts the value of a weed property, such as intensity, sensed by the in-situ sensors 208 at different locations in the field based upon the prior information map 258.

In some examples, the type of values in the functional predictive map 263 may be the same as the in-situ data type sensed by the in-situ sensors 208. In some instances, the type of values in the functional predictive map 263 may have different units from the data sensed by the in-situ sensors 208. In some examples, the type of values in the functional predictive map 263 may be different from the data type sensed by the in-situ sensors 208 but have a relationship to the type of data type sensed by the in-situ sensors 208. For example, in some examples, the data type sensed by the in-situ sensors 208 may be indicative of the type of values in the functional predictive map 263. In some examples, the type of data in the functional predictive map 263 may be different than the data type in the prior information map 258. In some instances, the type of data in the functional predictive map 263 may have different units from the data in the prior information map 258. In some examples, the type of data in the functional predictive map 263 may be different from the data type in the prior information map 258 but has a relationship to the data type in the prior information map 258. For example, in some examples, the data type in the prior information map 258 may be indicative of the type of data in the functional predictive map 263. In some examples, the type of data in the functional predictive map 263 is different than one of, or both of, the in-situ data type sensed by the in-situ sensors 208 and the data type in the prior information map 258. In some examples, the type of data in the functional predictive map 263 is the same as one of, or both of, of the in-situ data type sensed by the in-situ sensors 208 and the data type in prior information map 258. In some examples, the type of data in the functional predictive map 263 is the same as one of the in-situ data type sensed by the in-situ sensors 208 or the data type in the prior information map 258, and different than the other.

Continuing with the preceding example, in which prior information map 258 is a vegetative index map and in-situ sensor 208 senses a value indicative of weed intensity, predictive map generator 212 can use the vegetative index values in prior information map 258, and the model generated by predictive model generator 210, to generate a functional predictive map 263 that predicts the weed intensity at different locations in the field. Predictive map generator 212 thus outputs predictive map 264.

As shown in FIG. 2, predictive map 264 predicts the value of a sensed characteristic (sensed by in-situ sensors 208), or a characteristic related to the sensed characteristic, at various locations across the field based upon a prior information value in prior information map 258 at those locations and using the predictive model. For example, if predictive model generator 210 has generated a predictive model indicative of a relationship between a vegetative index value and weed intensity, then, given the vegetative index value at different locations across the field, predictive map generator 212 generates a predictive map 264 that predicts the value of the weed intensity at different locations across the field. The vegetative index value, obtained from the vegetative index map, at those locations and the relationship between vegetative index value and weed intensity, obtained from the predictive model, are used to generate the predictive map 264.

Some variations in the data types that are mapped in the prior information map 258, the data types sensed by in-situ sensors 208, and the data types predicted on the predictive map 264 will now be described.

In some examples, the data type in the prior information map 258 is different from the data type sensed by in-situ sensors 208, yet the data type in the predictive map 264 is the same as the data type sensed by the in-situ sensors 208. For instance, the prior information map 258 may be a vegetative index map, and the variable sensed by the in-situ sensors 208 may be yield. The predictive map 264 may then be a predictive yield map that maps predicted yield values to different geographic locations in the field. In another example, the prior information map 258 may be a vegetative index map, and the variable sensed by the in-situ sensors 208 may be crop height. The predictive map 264 may then be a predictive crop height map that maps predicted crop height values to different geographic locations in the field.

Also, in some examples, the data type in the prior information map 258 is different from the data type sensed by in-situ sensors 208, and the data type in the predictive map 264 is different from both the data type in the prior information map 258 and the data type sensed by the in-situ sensors 208. For instance, the prior information map 258 may be a vegetative index map, and the variable sensed by the in-situ sensors 208 may be crop height. The predictive map 264 may then be a predictive biomass map that maps predicted biomass values to different geographic locations in the field. In another example, the prior information map 258 may be a vegetative index map, and the variable sensed by the in-situ sensors 208 may be yield. The predictive map 264 may then be a predictive speed map that maps predicted harvester speed values to different geographic locations in the field.

In some examples, the prior information map 258 is from a prior pass through the field during a prior operation and the data type is different from the data type sensed by in-situ sensors 208, yet the data type in the predictive map 264 is the same as the data type sensed by the in-situ sensors 208. For instance, the prior information map 258 may be a seed population map generated during planting, and the variable sensed by the in-situ sensors 208 may be stalk size. The predictive map 264 may then be a predictive stalk size map that maps predicted stalk size values to different geographic locations in the field. In another example, the prior information map 258 may be a seeding hybrid map, and the variable sensed by the in-situ sensors 208 may be crop state such as standing crop or down crop. The predictive map 264 may then be a predictive crop state map that maps predicted crop state values to different geographic locations in the field.

In some examples, the prior information map 258 is from a prior pass through the field during a prior operation and the data type is the same as the data type sensed by in-situ sensors 208, and the data type in the predictive map 264 is also the same as the data type sensed by the in-situ sensors 208. For instance, the prior information map 258 may be a yield map generated during a previous year, and the variable sensed by the in-situ sensors 208 may be yield. The predictive map 264 may then be a predictive yield map that maps predicted yield values to different geographic locations in the field. In such an example, the relative yield differences in the georeferenced prior information map 258 from the prior year can be used by predictive model generator 210 to generate a predictive model that models a relationship between the relative yield differences on the prior information map 258 and the yield values sensed by in-situ sensors 208 during the current harvesting operation. The predictive model is then used by predictive map generator 210 to generate a predictive yield map.

In another example, the prior information map 258 may be a weed intensity map generated during a prior operation, such as from a sprayer, and the variable sensed by the in-situ sensors 208 may be weed intensity. The predictive map 264 may then be a predictive weed intensity map that maps predicted weed intensity values to different geographic locations in the field. In such an example, a map of the weed intensities at time of spraying is georeferenced recorded and provided to agricultural harvester 100 as a prior information map 258 of weed intensity. In-situ sensors 208 can detect weed intensity at geographic locations in the field and predictive model generator 210 may then build a predictive model that models a relationship between weed intensity at time of harvest and weed intensity at time of spraying. This is because the sprayer will have impacted the weed intensity at time of spraying, but weeds may still crop up in similar areas again by harvest. However, the weed areas at harvest are likely to have different intensity based on timing of the harvest, weather, weed type, among other things.

In some examples, predictive map 264 can be provided to the control zone generator 213. Control zone generator 213 groups adjacent portions of an area into one or more control zones based on data values of predictive map 264 that are associated with those adjacent portions. A control zone may include two or more contiguous portions of an area, such as a field, for which a control parameter corresponding to the control zone for controlling a controllable subsystem is constant. For example, a response time to alter a setting of controllable subsystems 216 may be inadequate to satisfactorily respond to changes in values contained in a map, such as predictive map 264. In that case, control zone generator 213 parses the map and identifies control zones that are of a defined size to accommodate the response time of the controllable subsystems 216. In another example, control zones may be sized to reduce wear from excessive actuator movement resulting from continuous adjustment. In some examples, there may be a different set of control zones for each controllable subsystem 216 or for groups of controllable subsystems 216. The control zones may be added to the predictive map 264 to obtain predictive control zone map 265. Predictive control zone map 265 can thus be similar to predictive map 264 except that predictive control zone map 265 includes control zone information defining the control zones. Thus, a functional predictive map 263, as described herein, may or may not include control zones. Both predictive map 264 and predictive control zone map 265 are functional predictive maps 263. In one example, a functional predictive map 263 does not include control zones, such as predictive map 264. In another example, a functional predictive map 263 does include control zones, such as predictive control zone map 265. In some examples, multiple crops may be simultaneously present in a field if an intercrop production system is implemented. In that case, predictive map generator 212 and control zone generator 213 are able to identify the location and characteristics of the two or more crops and then generate predictive map 264 and predictive map with control zones 265 accordingly.

It will also be appreciated that control zone generator 213 can cluster values to generate control zones and the control zones can be added to predictive control zone map 265, or a separate map, showing only the control zones that are generated. In some examples, the control zones may be used for controlling or calibrating agricultural harvester 100 or both. In other examples, the control zones may be presented to the operator 260 and used to control or calibrate agricultural harvester 100, and, in other examples, the control zones may be presented to the operator 260 or another user or stored for later use.

Predictive map 264 or predictive control zone map 265 or both are provided to control system 214, which generates control signals based upon the predictive map 264 or predictive control zone map 265 or both. In some examples, communication system controller 229 controls communication system 206 to communicate the predictive map 264 or predictive control zone map 265 or control signals based on the predictive map 264 or predictive control zone map 265 to other agricultural harvesters that are harvesting in the same field. In some examples, communication system controller 229 controls the communication system 206 to send the predictive map 264, predictive control zone map 265, or both to other remote systems.

Operator interface controller 231 is operable to generate control signals to control operator interface mechanisms 218. The operator interface controller 231 is also operable to present the predictive map 264 or predictive control zone map 265 or other information derived from or based on the predictive map 264, predictive control zone map 265, or both to operator 260. Operator 260 may be a local operator or a remote operator. As an example, controller 231 generates control signals to control a display mechanism to display one or both of predictive map 264 and predictive control zone map 265 for the operator 260. Controller 231 may generate operator actuatable mechanisms that are displayed and can be actuated by the operator to interact with the displayed map. The operator can edit the map by, for example, correcting a weed type displayed on the map, based on the operator's observation. Settings controller 232 can generate control signals to control various settings on the agricultural harvester 100 based upon predictive map 264, the predictive control zone map 265, or both. For instance, settings controller 232 can generate control signals to control machine and header actuators 248. In response to the generated control signals, the machine and header actuators 248 operate to control, for example, one or more of the sieve and chaffer settings, thresher clearance, rotor settings, cleaning fan speed settings, header height, header functionality, reel speed, reel position, draper functionality (where agricultural harvester 100 is coupled to a draper header), corn header functionality, internal distribution control and other actuators 248 that affect the other functions of the agricultural harvester 100. Path planning controller 234 illustratively generates control signals to control steering subsystem 252 to steer agricultural harvester 100 according to a desired path. Path planning controller 234 can control a path planning system to generate a route for agricultural harvester 100 and can control propulsion subsystem 250 and steering subsystem 252 to steer agricultural harvester 100 along that route. Feed rate controller 236 can control various subsystems, such as propulsion subsystem 250 and machine actuators 248, to control a feed rate based upon the predictive map 264 or predictive control zone map 265 or both. For instance, as agricultural harvester 100 approaches a weed patch having an intensity value above a selected threshold, feed rate controller 236 may reduce the speed of machine 100 to maintain constant feed rate of biomass through the machine. Header and reel controller 238 can generate control signals to control a header or a reel or other header functionality. Draper belt controller 240 can generate control signals to control a draper belt or other draper functionality based upon the predictive map 264, predictive control zone map 265, or both. Deck plate position controller 242 can generate control signals to control a position of a deck plate included on a header based on predictive map 264 or predictive control zone map 265 or both, and residue system controller 244 can generate control signals to control a residue subsystem 138 based upon predictive map 264 or predictive control zone map 265, or both. Machine cleaning controller 245 can generate control signals to control machine cleaning subsystem 254. For instance, based upon the different types of seeds or weeds passed through machine 100, a particular type of machine cleaning operation or a frequency with which a cleaning operation is performed may be controlled. Other controllers included on the agricultural harvester 100 can control other subsystems based on the predictive map 264 or predictive control zone map 265 or both as well.

FIGS. 3A and 3B (collectively referred to herein as FIG. 3) show a flow diagram illustrating one example of the operation of agricultural harvester 100 in generating a predictive map 264 and predictive control zone map 265 based upon prior information map 258.

At 280, agricultural harvester 100 receives prior information map 258. Examples of prior information map 258 or receiving prior information map 258 are discussed with respect to blocks 281, 282, 284 and 286. As discussed above, prior information map 258 maps values of a variable, corresponding to a first characteristic, to different locations in the field, as indicated at block 282. As indicated at block 281, receiving the prior information map 258 may involve selecting one or more of a plurality of possible prior information maps that are available. For instance, one prior information map may be a vegetative index map generated from aerial imagery. Another prior information map may be a map generated during a prior pass through the field which may have been performed by a different machine performing a previous operation in the field, such as a sprayer or other machine. The process by which one or more prior information maps are selected can be manual, semi-automated, or automated. The prior information map 258 is based on data collected prior to a current harvesting operation. This is indicated by block 284. For instance, the data may be collected based on aerial images taken during a previous year, or earlier in the current growing season, or at other times. The data may be based on data detected in ways other than using aerial images. For instance, agricultural harvester 100 may be fitted with a sensor, such as an internal optical sensor, that identifies weed seeds that are exiting agricultural harvester 100. The weed seed data detected by the sensor during a previous year's harvest may be used as data used to generate the prior information map 258. The sensed weed data may be combined with other data to generate the prior information map 258. For example, based upon a magnitude of the weed seeds exiting agricultural harvester 100 at different locations and based upon other factors, such as whether the seeds are being spread by a spreader or dropped in a windrow; the weather conditions, such as wind, when the seeds are being dropped or spread; drainage conditions which may move seeds around in the field; or other information, the location of those weed seeds can be predicted so that the prior information map 258 maps the predicted seed locations in the field. The data for the prior information map 258 can be transmitted to agricultural harvester 100 using communication system 206 and stored in data store 202. The data for the prior information map 258 can be provided to agricultural harvester 100 using communication system 206 in other ways as well, and this is indicated by block 286 in the flow diagram of FIG. 3. In some examples, the prior information map 258 can be received by communication system 206.

Upon commencement of a harvesting operation, in-situ sensors 208 generate sensor signals indicative of one or more in-situ data values indicative of a characteristic, for example, a plant characteristic, such as a weed characteristic, as indicated by block 288. Examples of in-situ sensors 288 are discussed with respect to blocks 222, 290, and 226. As explained above, the in-situ sensors 208 include on-board sensors 222; remote in-situ sensors 224, such as UAV-based sensors flown at a time to gather in-situ data, shown in block 290; or other types of in-situ sensors, designated by in-situ sensors 226. In some examples, data from on-board sensors is georeferenced using position, heading, or speed data from geographic position sensor 204.

Predictive model generator 210 controls the prior information variable-to-in-situ variable model generator 228 to generate a model that models a relationship between the mapped values contained in the prior information map 258 and the in-situ values sensed by the in-situ sensors 208 as indicated by block 292. The characteristics or data types represented by the mapped values in the prior information map 258 and the in-situ values sensed by the in-situ sensors 208 may be the same characteristics or data type or different characteristics or data types.

The relationship or model generated by predictive model generator 210 is provided to predictive map generator 212. Predictive map generator 212 generates a predictive map 264 that predicts a value of the characteristic sensed by the in-situ sensors 208 at different geographic locations in a field being harvested, or a different characteristic that is related to the characteristic sensed by the in-situ sensors 208, using the predictive model and the prior information map 258, as indicated by block 294.

It should be noted that, in some examples, the prior information map 258 may include two or more different maps or two or more different map layers of a single map. Each map layer may represent a different data type from the data type of another map layer or the map layers may have the same data type that were obtained at different times. Each map in the two or more different maps or each layer in the two or more different map layers of a map maps a different type of variable to the geographic locations in the field. In such an example, predictive model generator 210 generates a predictive model that models the relationship between the in-situ data and each of the different variables mapped by the two or more different maps or the two or more different map layers. Similarly, the in-situ sensors 208 can include two or more sensors each sensing a different type of variable. Thus, the predictive model generator 210 generates a predictive model that models the relationships between each type of variable mapped by the prior information map 258 and each type of variable sensed by the in-situ sensors 208. Predictive map generator 212 can generate a functional predictive map 263 that predicts a value for each sensed characteristic sensed by the in-situ sensors 208 (or a characteristic related to the sensed characteristic) at different locations in the field being harvested using the predictive model and each of the maps or map layers in the prior information map 258.

Predictive map generator 212 configures the predictive map 264 so that the predictive map 264 is actionable (or consumable) by control system 214. Predictive map generator 212 can provide the predictive map 264 to the control system 214 or to control zone generator 213 or both. Some examples of different ways in which the predictive map 264 can be configured or output are described with respect to blocks 296, 295, 299 and 297. For instance, predictive map generator 212 configures predictive map 264 so that predictive map 264 includes values that can be read by control system 214 and used as the basis for generating control signals for one or more of the different controllable subsystems of the agricultural harvester 100, as indicated by block 296.

Control zone generator 213 can divide the predictive map 264 into control zones based on the values on the predictive map 264. Contiguously-geolocated values that are within a threshold value of one another can be grouped into a control zone. The threshold value can be a default threshold value, or the threshold value can be set based on an operator input, based on an input from an automated system, or based on other criteria. A size of the zones may be based on a responsiveness of the control system 214, the controllable subsystems 216, based on wear considerations, or on other criteria as indicated by block 295. Predictive map generator 212 configures predictive map 264 for presentation to an operator or other user. Control zone generator 213 can configure predictive control zone map 265 for presentation to an operator or other user. This is indicated by block 299. When presented to an operator or other user, the presentation of the predictive map 264 or predictive control zone map 265 or both may contain one or more of the predictive values on the predictive map 264 correlated to geographic location, the control zones on predictive control zone map 265 correlated to geographic location, and settings values or control parameters that are used based on the predicted values on map 264 or zones on predictive control zone map 265. The presentation can, in another example, include more abstracted information or more detailed information. The presentation can also include a confidence level that indicates an accuracy with which the predictive values on predictive map 264 or the zones on predictive control zone map 265 conform to measured values that may be measured by sensors on agricultural harvester 100 as agricultural harvester 100 moves through the field. Further where information is presented to more than one location, an authentication and authorization system can be provided to implement authentication and authorization processes. For instance, there may be a hierarchy of individuals that are authorized to view and change maps and other presented information. By way of example, an on-board display device may show the maps in near real time locally on the machine, or the maps may also be generated at one or more remote locations, or both. In some examples, each physical display device at each location may be associated with a person or a user permission level. The user permission level may be used to determine which display elements are visible on the physical display device and which values the corresponding person may change. As an example, a local operator of machine 100 may be unable to see the information corresponding to the predictive map 264 or make any changes to machine operation. A supervisor, such as a supervisor at a remote location, however, may be able to see the predictive map 264 on the display but be prevented from making any changes. A manager, who may be at a separate remote location, may be able to see all of the elements on predictive map 264 and also be able to change the predictive map 264. In some instances, the predictive map 264 accessible and changeable by a manager located remotely may be used in machine control. This is one example of an authorization hierarchy that may be implemented. The predictive map 264 or predictive control zone map 265 or both can be configured in other ways as well, as indicated by block 297.

At block 298, input from geographic position sensor 204 and other in-situ sensors 208 are received by the control system. Particularly, at block 300, control system 214 detects an input from the geographic position sensor 204 identifying a geographic location of agricultural harvester 100. Block 302 represents receipt by the control system 214 of sensor inputs indicative of trajectory or heading of agricultural harvester 100, and block 304 represents receipt by the control system 214 of a speed of agricultural harvester 100. Block 306 represents receipt by the control system 214 of other information from various in-situ sensors 208.

At block 308, control system 214 generates control signals to control the controllable subsystems 216 based on the predictive map 264 or predictive control zone map 265 or both and the input from the geographic position sensor 204 and any other in-situ sensors 208. At block 310, control system 214 applies the control signals to the controllable subsystems. It will be appreciated that the particular control signals that are generated, and the particular controllable subsystems 216 that are controlled, may vary based upon one or more different things. For example, the control signals that are generated and the controllable subsystems 216 that are controlled may be based on the type of predictive map 264 or predictive control zone map 265 or both that is being used. Similarly, the control signals that are generated and the controllable subsystems 216 that are controlled and the timing of the control signals can be based on various latencies of crop flow through the agricultural harvester 100 and the responsiveness of the controllable subsystems 216.

By way of example, a generated predictive map 264 in the form of a predictive weed map can be used to control one or more subsystems 216. For instance, the predictive weed map can include weed intensity values georeferenced to locations within the field being harvested. The weed intensity values from the predictive weed map can be extracted and used to control the steering and propulsion subsystems 252 and 250. By controlling the steering and propulsion subsystems 252 and 250, a feed rate of material moving through the agricultural harvester 100 can be controlled. Similarly, the header height can be controlled to take in more or less material, and, thus, the header height can also be controlled to control feed rate of material through the agricultural harvester 100. In other examples, if the predictive map 264 maps weed height relative to positions in the field, control of the header height can be implemented. For example, if the values present in the predictive weed map indicate one or more areas having weed height with a first height amount, then header and reel controller 238 can control the header height so that the header is positioned above the first height amount of the weeds within the one or more areas having weeds at the first height amount when performing the harvesting operation. Thus, the header and reel controller 238 can be controlled using georeferenced values present in the predictive weed map to position the header to a height that is above the predicted height values of weeds obtained from the predictive weed map. Further, the header height can be changed automatically by the header and reel controller 238 as the agricultural harvester 100 proceeds through the field using georeferenced values obtained from the predictive weed map. The preceding example involving weed height and intensity using a predictive weed map is provided merely as an example. Consequently, a wide variety of other control signals can be generated using values obtained from a predictive weed map or other type of predictive map to control one or more of the controllable subsystems 216.

At block 312, a determination is made as to whether the harvesting operation has been completed. If harvesting is not completed, the processing advances to block 314 where in-situ sensor data from geographic position sensor 204 and in-situ sensors 208 (and perhaps other sensors) continue to be read.

In some examples, at block 316, agricultural harvester 100 can also detect learning trigger criteria to perform machine learning on one or more of the predictive map 264, predictive control zone map 265, the model generated by predictive model generator 210, the zones generated by control zone generator 213, one or more control algorithms implemented by the controllers in the control system 214, and other triggered learning.

The learning trigger criteria can include any of a wide variety of different criteria. Some examples of detecting trigger criteria are discussed with respect to blocks 318, 320, 321, 322 and 324. For instance, in some examples, triggered learning can involve recreation of a relationship used to generate a predictive model when a threshold amount of in-situ sensor data are obtained from in-situ sensors 208. In such examples, receipt of an amount of in-situ sensor data from the in-situ sensors 208 that exceeds a threshold triggers or causes the predictive model generator 210 to generate a new predictive model that is used by predictive map generator 212. Thus, as agricultural harvester 100 continues a harvesting operation, receipt of the threshold amount of in-situ sensor data from the in-situ sensors 208 triggers the creation of a new relationship represented by a predictive model generated by predictive model generator 210. Further, new predictive map 264, predictive control zone map 265, or both can be regenerated using the new predictive model. Block 318 represents detecting a threshold amount of in-situ sensor data used to trigger creation of a new predictive model.

In other examples, the learning trigger criteria may be based on how much the in-situ sensor data from the in-situ sensors 208 are changing, such as over time or compared to previous values. For example, if variations within the in-situ sensor data (or the relationship between the in-situ sensor data and the information in prior information map 258) are within a selected range or is less than a defined amount, or below a threshold value, then a new predictive model is not generated by the predictive model generator 210. As a result, the predictive map generator 212 does not generate a new predictive map 264, predictive control zone map 265, or both. However, if variations within the in-situ sensor data are outside of the selected range, are greater than the defined amount, or are above the threshold value, for example, then the predictive model generator 210 generates a new predictive model using all or a portion of the newly received in-situ sensor data that the predictive map generator 212 uses to generate a new predictive map 264. At block 320, variations in the in-situ sensor data, such as a magnitude of an amount by which the data exceeds the selected range or a magnitude of the variation of the relationship between the in-situ sensor data and the information in the prior information map 258, can be used as a trigger to cause generation of a new predictive model and predictive map. Keeping with the examples described above, the threshold, the range, and the defined amount can be set to default values; set by an operator or user interaction through a user interface; set by an automated system; or set in other ways.

Other learning trigger criteria can also be used. For instance, if predictive model generator 210 switches to a different prior information map (different from the originally selected prior information map 258), then switching to the different prior information map may trigger re-learning by predictive model generator 210, predictive map generator 212, control zone generator 213, control system 214, or other items. In another example, transitioning of agricultural harvester 100 to a different topography or to a different control zone may be used as learning trigger criteria as well.

In some instances, operator 260 can also edit the predictive map 264 or predictive control zone map 265 or both. The edits can change a value on the predictive map 264, change a size, shape, position, or existence of a control zone on predictive control zone map 265, or both. Block 321 shows that edited information can be used as learning trigger criteria.

In some instances, it may also be that operator 260 observes that automated control of a controllable subsystem, is not what the operator desires. In such instances, the operator 260 may provide a manual adjustment to the controllable subsystem reflecting that the operator 260 desires the controllable subsystem to operate in a different way than is being commanded by control system 214. Thus, manual alteration of a setting by the operator 260 can cause one or more of predictive model generator 210 to relearn a model, predictive map generator 212 to regenerate map 264, control zone generator 213 to regenerate one or more control zones on predictive control zone map 265, and control system 214 to relearn a control algorithm or to perform machine learning on one or more of the controller components 232 through 246 in control system 214 based upon the adjustment by the operator 260, as shown in block 322. Block 324 represents the use of other triggered learning criteria.

In other examples, relearning may be performed periodically or intermittently based, for example, upon a selected time interval such as a discrete time interval or a variable time interval, as indicated by block 326.

If relearning is triggered, whether based upon learning trigger criteria or based upon passage of a time interval, as indicated by block 326, then one or more of the predictive model generator 210, predictive map generator 212, control zone generator 213, and control system 214 performs machine learning to generate a new predictive model, a new predictive map, a new control zone, and a new control algorithm, respectively, based upon the learning trigger criteria. The new predictive model, the new predictive map, and the new control algorithm are generated using any additional data that has been collected since the last learning operation was performed. Performing relearning is indicated by block 328.

If the harvesting operation has been completed, operation moves from block 312 to block 330 where one or more of the predictive map 264, predictive control zone map 265, and predictive model generated by predictive model generator 210 are stored. The predictive map 264, predictive control zone map 265, and predictive model may be stored locally on data store 202 or sent to a remote system using communication system 206 for later use.

It will be noted that while some examples herein describe predictive model generator 210 and predictive map generator 212 receiving a prior information map in generating a predictive model and a functional predictive map, respectively. In other examples, the predictive model generator 210 and predictive map generator 212 can receive other types of maps, including predictive maps, such as a functional predictive map generated during the harvesting operation.

FIG. 4 is a block diagram of a portion of the agricultural harvester 100 shown in FIG. 1. Particularly, FIG. 4 shows, among other things, examples of the predictive model generator 210 and the predictive map generator 212 in more detail. FIG. 4 also illustrates information flow among the various components shown. The predictive model generator 210 receives a vegetative index map 332 as a prior information map. Predictive model generator 210 also receives a geographic location 334, or an indication of a geographic location, from geographic position sensor 204. In-situ sensors 208 illustratively include a weed sensor, such as weed sensor 336, as well as a processing system 338. In some instances, weed sensor 336 may be located on board the agricultural harvester 100. The processing system 338 processes sensor data generated from on-board weed sensor 336 to generate processed data, some examples of which are described below.

In some examples, weed sensor 336 may be an optical sensor, such as a camera, that generates images of an area of a field to be harvested. In some instances, the optical sensor may be arranged on the agricultural harvester 100 to collect images of an area adjacent to the agricultural harvester 100, such as in an area that lies in front of, to the side of, rearwardly of, or in another direction relative to the agricultural harvester 100 as agricultural harvester 100 moves through the field during a harvesting operation. The optical sensor may also be located on or inside of the agricultural harvester 100 to obtain images of one or more portions of the exterior or interior of the agricultural harvester 100. Processing system 338 processes one or more images obtained via the weed sensor 336 to generate processed image data identifying one or more characteristics of weeds in the image. Weed characteristics detected by the processing system 338 may include a location of weeds present in the image, an intensity of a weed patch in an image, or a type of weed in the image.

In-situ sensor 208 may be or include other types of sensors, such as a camera located along a path by which severed crop material travels in agricultural harvester 100 (referred to hereinafter as "process camera"). A process camera may be located internal to the agricultural harvester 100 and may capture images of crop material, including seeds, as the crop material moves through or is expelled from the agricultural harvester 100. Process cameras may obtain images of seeds, and image processing system 338 is operable to identify the presence of weed seeds, a quantity of weed seeds detected, e.g., a number of the weed seeds (so as to give an indication of a density of weeds being encountered in the field), and identify one or more weed types based on the types of seeds identified within the images. Thus, in some examples, the processing system 338 is operable to detect the presence of weed seeds within severed crop material passing through the agricultural harvester 100, an amount of weed seeds present in the severed crop material, e.g., amount per volume of severed crop material, and the types of weeds corresponding to the detected weed seeds being encountered by the agricultural harvester 100 during the course of a harvesting operation.

In other examples, weed sensor 336 can rely on any wavelength(s) of electromagnetic energy and the way the electromagnetic energy is reflected by, absorbed by, attenuated by, or transmitted through weed seeds or biomass. The weed sensor 336 may sense other electromagnetic properties of weed seeds and biomass, such as electrical permittivity, when the severed crop material passes between two capacitive plates. The weed sensor 336 may also rely on mechanical properties of seeds and biomass, such as a signal generated when a weed seed impacts a piezoelectric sheet or when an impact by a seed is detected by a microphone or accelerometer. Other material properties and sensors may also be used. In some examples, raw or processed data from weed sensor 336 may be presented to operator 260 via operator interface mechanism 218. Operator 260 may be onboard the agricultural harvester 100 or at a remote location.

The present discussion proceeds with respect to an example in which weed sensor 336 is an image sensor, such as a camera. It will be appreciated that this is just one example, and the sensors mentioned above, as other examples of weed sensor 336, are contemplated herein as well. As shown in FIG. 4, the example predictive model generator 210 includes one or more of a weed presence-to-vegetative index model generator 342, a weed intensity-to-vegetative index model generator 344, and a weed type-to-vegetative index model generator 346. In other examples, the predictive model generator 210 may include additional, fewer, or different components than those shown in the example of FIG. 4. Consequently, in some examples, the predictive model generator 210 may include other items 348 as well, which may include other types of predictive model generators to generate other types of weed characteristic models.

Model generator 342 identifies a relationship between weed presence detected in image data 340, at a geographic location corresponding to where the image data 340 were obtained, and vegetative index values from the vegetative index map 332 corresponding to the same location in the field where the weed characteristic was detected. Based on this relationship established by model generator 342, model generator 342 generates a predictive weed model. The predictive weed model is used by weed location map generator 352 to predict weed presence at different locations in the field based upon the georeferenced vegetative index value contained in the vegetative index map 332 at the same locations in the field.

Model generator 344 identifies a relationship between weed intensity level represented in the processed image data 340, at a geographic location corresponding to the image data 340, and the vegetative index value at the same geographic location. Again, the vegetative index value is the georeferenced value contained in the vegetative index map 332. Model generator 344 then generates a predictive weed model that is used by weed intensity map generator 354 to predict the weed intensity at a location in the field based upon the vegetative index value for that location in the field.

Model generator 346 identifies a relationship between the weed type identified by processed image data 340 at a particular location in the field and the vegetative index value from the vegetative index map 332 at that same location. Model generator 346 generates a predictive weed model that is used by weed type map generator 356 to predict the weed type at a particular location in the field based upon the vegetative index value at that location in the field.

In light of the above, the predictive model generator 210 is operable to produce a plurality of predictive weed models, such as one or more of the predictive weed models generated by model generators 342, 344 and 346. In another example, two or more of the predictive weed models described above may be combined into a single predictive weed model that predicts two or more of weed location, weed intensity, and weed type based upon the vegetative index value at different locations in the field. Any of these weed models, or combinations thereof, are represented collectively by weed model 350 in FIG. 4.

The predictive weed model 350 is provided to predictive map generator 212. In the example of FIG. 4, predictive map generator 212 includes a weed location map generator 352, a weed intensity map generator 354, and a weed type map generator 356. In other examples, the predictive map generator 212 may include additional, fewer, or different map generators. Thus, in some examples, the predictive map generator 212 may include other items 358 which may include other types of map generators to generate weed maps for other types of weed characteristics. Weed location map generator 352 receives the predictive weed model 350, which predicts weed presence based upon a vegetative index value along with the vegetative index map 332, and generates a predictive map that predicts the presence of weeds at different locations in the field.

Map generator 354 generates a predictive map that predicts weed intensity at different locations in the field based upon the vegetative index value at those locations in the field and the predictive weed model 350. Weed type map generator 356 illustratively generates a predictive weed map that predicts weed types at different locations in the field based upon the vegetative index values at those locations in the field and the predictive weed model 350.

Predictive map generator 212 outputs one or more predictive weed maps 360 that are predictive of one or more of weed location, weed intensity, or weed type. Each of the predictive weed maps 360 predicts the respective weed characteristic at different locations in a field. Each of the generated predictive weed maps 360 may be provided to control zone generator 213, control system 214, or both. Control zone generator 213 generates control zones and incorporates those control zones into the functional predictive map, i.e., predictive map 360, to produce predictive control zone map 265. One or both of predictive map 264 and predictive control zone map 265 may be provided to control system 214, which generates control signals to control one or more of the controllable subsystems 216 based upon the predictive map 264, predictive control zone map 265, or both.

FIG. 5 is a flow diagram of an example of operation of predictive model generator 210 and predictive map generator 212 in generating the predictive weed model 350 and the predictive weed map 360. At block 362, predictive model generator 210 and predictive map generator 212 receive a prior vegetative index map 332. At block 364, processing system 338 receives one or more images from weed sensor 336. As discussed above, the weed sensor 336 may be a camera, such as forward looking camera 366; an optical sensor 368, such as a camera, looking internal to a combine harvester; or another type of on-board weed sensor 370.

At block 372, processing system 338 processes the one or more received images to generate image data indicative of a characteristic of weeds present in the one or more images. At block 374, the image data may be indicative of weed location, weed intensity, or both that may exist at a location, such as at a location in front of a combine harvester. In some instances, as indicated at block 376, the image data may be indicative of weed seeds located inside a combine harvester or being expelled from a combine harvester. In some instances, as indicated at block 380, the image data may be indicative of weed type. Thus, the image data include a weed type indicator 378 that identifies a type of weed or weeds being encountered by the combine harvester. Weed type may be determined based on one or more images of a weed plant, one or more images of a weed seed, or one or more images containing subject matter that is indicative of weed type. The image data can include other data as well.

At block 382, predictive model generator 210 also obtains the geographic location corresponding to the image data. For instance, the predictive model generator 210 can obtain the geographic position from geographic position sensor 204 and determine, based upon machine delays, machine speed, etc., a precise geographic location where the image was taken or from which the image data 340 was derived.

At block 384, predictive model generator 210 generates one or more predictive weed models, such as weed model 350, that model a relationship between a vegetative index value obtained from a prior information map, such as prior information map 258, and a weed characteristic being sensed by the in-situ sensor 208 or a related characteristic. For instance, predictive model generator 210 may generate a predictive weed model that models the relationship between a vegetative index value and a sensed characteristic including weed location, weed intensity, or weed type indicated by the image data obtained from in-situ sensor 208.

At block 386, the predictive weed model, such as predictive weed model 350, is provided to predictive map generator 212 which generates a predictive weed map 360 that maps a predicted weed characteristic based on the vegetative index map and the predictive weed model 350. For instance, in some examples, the predictive weed map 360 predicts weed location. In some examples, the predictive weed map 360 predicts weed location along with weed intensity values, as indicated by block 388. In some examples, the predictive weed map 360 predicts weed location and weed type, as indicated by block 390, and in still other examples, the predictive map 360 predicts other items, as indicated by block 392. Further, the predictive weed map 360 can be generated during the course of an agricultural operation. Thus, as an agricultural harvester is moving through a field performing an agricultural operation, the predictive weed map 360 is generated as the agricultural operation is being performed.

At block 394, predictive map generator 212 outputs the predictive weed map 360. At block 391 predictive weed map generator 212 outputs the predictive weed map for presentation to and possible interaction by operator 260. At block 393, predictive map generator 212 may configure the map for consumption by control system 214. At block 395, predictive map generator 212 can also provide the map 360 to control zone generator 213 for generation of control zones. At block 397, predictive map generator 212 configures the map 360 in other ways as well. The predictive weed map 360 (with or without the control zones) is provided to control system 214. At block 396, control system 214 generates control signals to control the controllable subsystems 216 based upon the predictive weed map 360.

It can thus be seen that the present system takes a prior information map that maps a characteristic such as a vegetative index value or information from a prior operation pass to different locations in a field. The present system also uses one or more in-situ sensors that sense in-situ sensor data that is indicative of a characteristic, such as weed location, weed intensity, or weed type, and generates a model that models a relationship between the characteristic sensed using the in-situ sensor, or a related characteristic, and the characteristic mapped in the prior information map. Thus, the present system generates a functional predictive map using a model, in-situ data, and a prior information map and may configure the generated functional predictive map for consumption by a control system, for presentation to a local or remote operator or other user, or both. For example, the control system may use the map to control one or more systems of a combine harvester.

The present discussion has mentioned processors and servers. In some examples, the processors and servers include computer processors with associated memory and timing circuitry, not separately shown. The processors and servers are functional parts of the systems or devices to which the processors and servers belong and are activated by and facilitate the functionality of the other components or items in those systems.

Also, a number of user interface displays have been discussed. The displays can take a wide variety of different forms and can have a wide variety of different user actuatable operator interface mechanisms disposed thereon. For instance, user actuatable operator interface mechanisms may include text boxes, check boxes, icons, links, drop-down menus, search boxes, etc. The user actuatable operator interface mechanisms can also be actuated in a wide variety of different ways. For instance, the user actuatable operator interface mechanisms can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition may be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores may be local to the systems accessing the data stores, one or more of the data stores may all be located remote form a system utilizing the data store, or one or more data stores may be local while others are remote. All of these configurations are contemplated by the present disclosure.

Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality may be distributed among more components. In different examples, some functionality may be added, and some may be removed.

It will be noted that the above discussion has described a variety of different systems, components, logic, and interactions. It will be appreciated that any or all of such systems, components, logic and interactions may be implemented by hardware items, such as processors, memory, or other processing components, some of which are described below, that perform the functions associated with those systems, components, logic, or interactions. In addition, any or all of the systems, components, logic and interactions may be implemented by software that is loaded into a memory and is subsequently executed by a processor or server or other computing component, as described below. Any or all of the systems, components, logic and interactions may also be implemented by different combinations of hardware, software, firmware, etc., some examples of which are described below. These are some examples of different structures that may be used to implement any or all of the systems, components, logic and interactions described above. Other structures may be used as well.

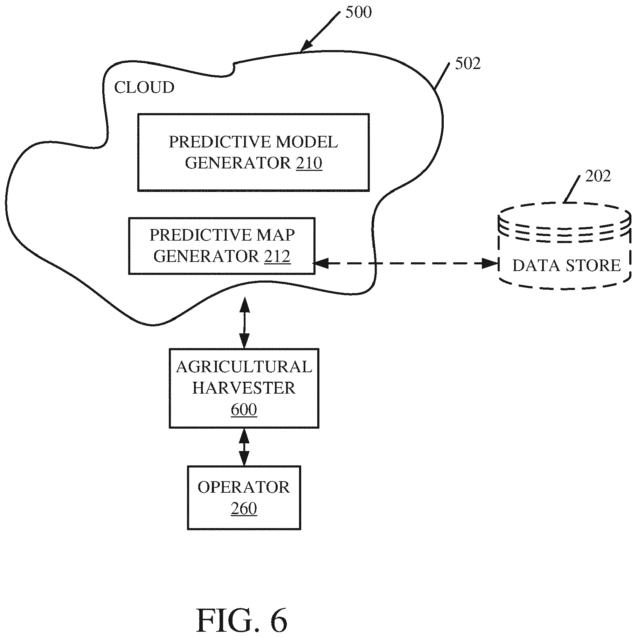

FIG. 6 is a block diagram of agricultural harvester 600, which may be similar to agricultural harvester 100 shown in FIG. 2. The agricultural harvester 600 communicates with elements in a remote server architecture 500. In some examples, remote server architecture 500 provides computation, software, data access, and storage services that do not require end-user knowledge of the physical location or configuration of the system that delivers the services. In various examples, remote servers may deliver the services over a wide area network, such as the internet, using appropriate protocols. For instance, remote servers may deliver applications over a wide area network and may be accessible through a web browser or any other computing component. Software or components shown in FIG. 2 as well as data associated therewith, may be stored on servers at a remote location. The computing resources in a remote server environment may be consolidated at a remote data center location, or the computing resources may be dispersed to a plurality of remote data centers. Remote server infrastructures may deliver services through shared data centers, even though the services appear as a single point of access for the user. Thus, the components and functions described herein may be provided from a remote server at a remote location using a remote server architecture. Alternatively, the components and functions may be provided from a server, or the components and functions can be installed on client devices directly, or in other ways.

In the example shown in FIG. 6, some items are similar to those shown in FIG. 2 and those items are similarly numbered. FIG. 6 specifically shows that predictive model generator 210 or predictive map generator 212, or both, may be located at a server location 502 that is remote from the agricultural harvester 600. Therefore, in the example shown in FIG. 6, agricultural harvester 600 accesses systems through remote server location 502.

FIG. 6 also depicts another example of a remote server architecture. FIG. 6 shows that some elements of FIG. 2 may be disposed at a remote server location 502 while others may be located elsewhere. By way of example, data store 202 may be disposed at a location separate from location 502 and accessed via the remote server at location 502. Regardless of where the elements are located, the elements can be accessed directly by agricultural harvester 600 through a network such as a wide area network or a local area network; the elements can be hosted at a remote site by a service; or the elements can be provided as a service or accessed by a connection service that resides in a remote location. Also, data may be stored in any location, and the stored data may be accessed by, or forwarded to, operators, users, or systems. For instance, physical carriers may be used instead of, or in addition to, electromagnetic wave carriers. In some examples, where wireless telecommunication service coverage is poor or nonexistent, another machine, such as a fuel truck or other mobile machine or vehicle, may have an automated, semi-automated, or manual information collection system. As the combine harvester 600 comes close to the machine containing the information collection system, such as a fuel truck prior to fueling, the information collection system collects the information from the combine harvester 600 using any type of ad-hoc wireless connection. The collected information may then be forwarded to another network when the machine containing the received information reaches a location where wireless telecommunication service coverage or other wireless coverage- is available. For instance, a fuel truck may enter an area having wireless communication coverage when traveling to a location to fuel other machines or when at a main fuel storage location. All of these architectures are contemplated herein. Further, the information may be stored on the agricultural harvester 600 until the agricultural harvester 600 enters an area having wireless communication coverage. The agricultural harvester 600, itself, may send the information to another network.

It will also be noted that the elements of FIG. 2, or portions thereof, may be disposed on a wide variety of different devices. One or more of those devices may include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

In some examples, remote server architecture 500 may include cybersecurity measures. Without limitation, these measures may include encryption of data on storage devices, encryption of data sent between network nodes, authentication of people or processes accessing data, as well as the use of ledgers for recording metadata, data, data transfers, data accesses, and data transformations. In some examples, the ledgers may be distributed and immutable (e.g., implemented as blockchain).

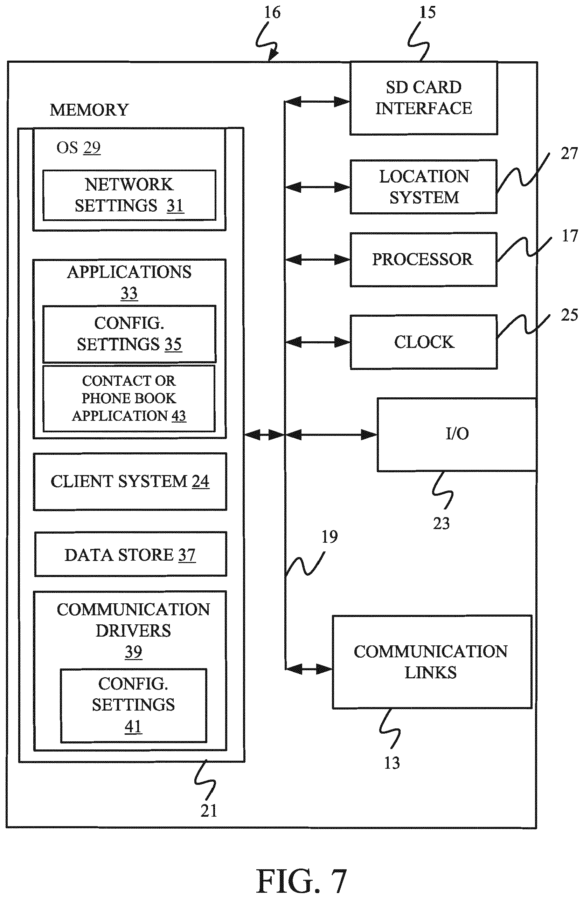

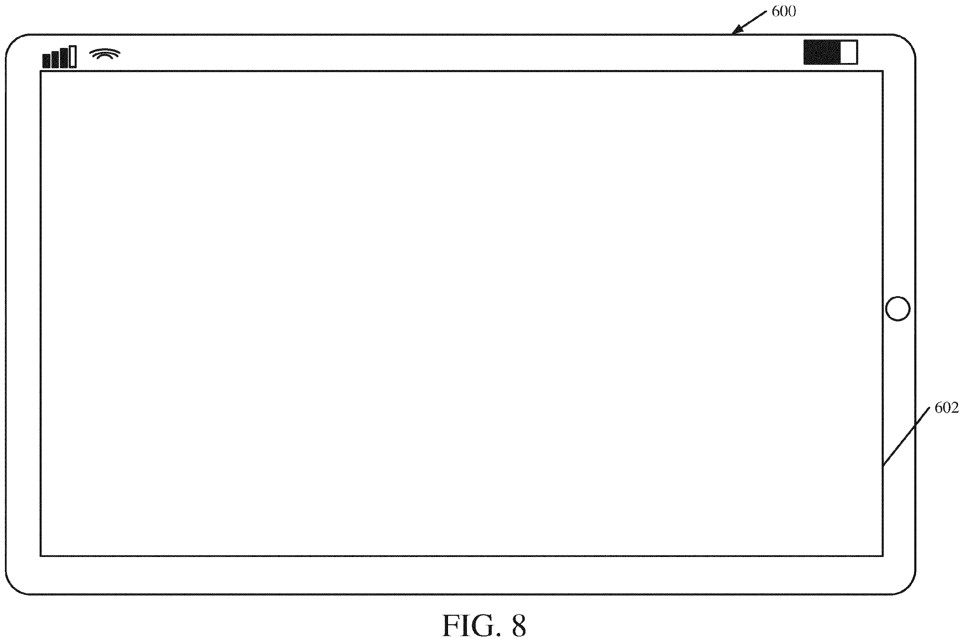

FIG. 7 is a simplified block diagram of one illustrative example of a handheld or mobile computing device that can be used as a user's or client's hand held device 16, in which the present system (or parts of it) can be deployed. For instance, a mobile device can be deployed in the operator compartment of agricultural harvester 100 for use in generating, processing, or displaying the maps discussed above. FIGS. 8-9 are examples of handheld or mobile devices.

FIG. 7 provides a general block diagram of the components of a client device 16 that can run some components shown in FIG. 2, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from other FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 may also include computer storage media (described below). Memory 21 stores computer readable instructions that, when executed by processor 17, cause the processor to perform computer-implemented steps or functions according to the instructions. Processor 17 may be activated by other components to facilitate their functionality as well.

FIG. 8 shows one example in which device 16 is a tablet computer 600. In FIG. 8, computer 600 is shown with user interface display screen 602. Screen 602 can be a touch screen or a pen-enabled interface that receives inputs from a pen or stylus. Tablet computer 600 may also use an on-screen virtual keyboard. Of course, computer 600 might also be attached to a keyboard or other user input device through a suitable attachment mechanism, such as a wireless link or USB port, for instance. Computer 600 may also illustratively receive voice inputs as well.

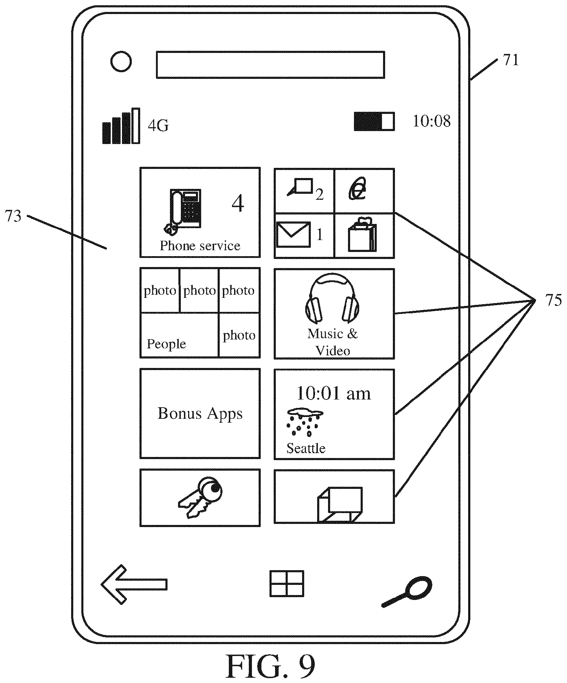

FIG. 9 is similar to FIG. 8 except that the device is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

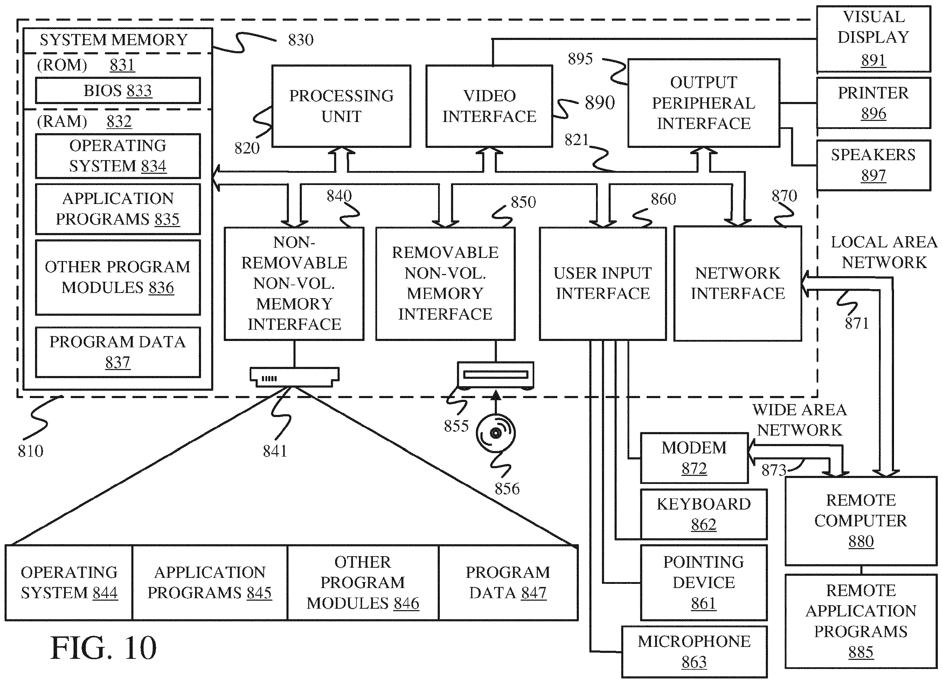

FIG. 10 is one example of a computing environment in which elements of FIG. 2can be deployed. With reference to FIG. 10, an example system for implementing some embodiments includes a computing device in the form of a computer 810 programmed to operate as discussed above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIG. 2 can be deployed in corresponding portions of FIG. 10.

Computer 810 typically includes a variety of computer readable media. Computer readable media may be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory or both such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data or program modules or both that are immediately accessible to and/or presently being operated on by processing unit 820. By way of example, and not limitation, FIG. 10 illustrates operating system 834, application programs 835, other program modules 836, and program data 837.

The computer 810 may also include other removable/non-removable volatile/nonvolatile computer storage media. By way of example only, FIG. 10 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 10, provide storage of computer readable instructions, data structures, program modules and other data for the computer 810. In FIG. 10, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 10 illustrates, for example, that remote application programs 885 can reside on remote computer 880.

## Claims

1. An agricultural work machine (100), comprising:
a communication system (206) configured to receive a prior information map that includes values of a first agricultural characteristic corresponding to different geographic locations in a field;
a geographic position sensor (204) configured to detect a geographic location of the agricultural work machine (100);
an in-situ sensor (208) configured to detect a value of a second agricultural characteristic, which is different from the first agricultural characteristic, corresponding to the geographic location; and
a predictive model generator (210) configured to generate a predictive agricultural model that models a relationship between the first agricultural characteristic and the second agricultural characteristic based on a value of the first agricultural characteristic in the prior information map at the geographic location and a value of the second agricultural characteristic sensed by the in-situ sensor (208) at the geographic location;
**characterized by** a predictive map generator (212) configured to generate a functional predictive agricultural map of the field, that maps predictive values of the second agricultural characteristic to the different geographic locations in the field, based on the values of the first agricultural characteristic in the prior information map and based on the predictive agricultural model.

2. The agricultural work machine (100) of claim 1, wherein the predictive map generator (212) is configured to configure the functional predictive agricultural map for consumption by a control system (214) that generates control signals to control a controllable subsystem (216) on the agricultural work machine (100) based on the functional predictive agricultural map.

3. The agricultural work machine (100) of claim 1, wherein the in-situ sensor (208) on the agricultural work machine (100) is configured to detect, as the value of the second agricultural characteristic, a weed characteristic corresponding to the geographic location.

4. The agricultural work machine (100) of claim 3, wherein the in-situ sensor (208) comprises:
an image detector (336) configured to detect an image indicative of the weed characteristic.

5. The agricultural work machine (100) of claim 4, wherein the image detector (336) is oriented to detect an image proximate the agricultural work machine (100) and further comprises:
an image processing system (338) configured to process the image to identify the weed characteristic in the image.

6. The agricultural work machine (100) of claim 3, wherein the in-situ sensor (208) is configured to generate a sensor signal indicative of the weed characteristic and further comprises:
a processing system (338) that receives the sensor signal and is configured to identify, as the weed characteristic, a weed intensity value indicative of an intensity of weeds at the geographic location.

7. The agricultural work machine (100) of claim 3, wherein the in-situ sensor (208) is configured to generate a sensor signal indicative of the weed characteristic and further comprises:
a processing system (338) that receives the sensor signal and is configured to identify, as the weed characteristic, a weed type characteristic value indicative of a type of weeds at the geographic location.

8. The agricultural work machine (100) of claim 5, wherein the image detector (336) is configured to capture an image that includes at least one weed seed processed by the agricultural work machine (100) and wherein the image processing system (338) is configured to identify a weed intensity value, indicative of an intensity of weeds at the geographic location, or a weed type value, indicative of a type of weed at the geographic location, based on the image of the at least one weed seed.

9. The agricultural work machine (100) of claim 3, wherein the prior information map comprises a prior vegetative index map that maps, as the first agricultural characteristic, vegetative index values to the different geographic locations in the field, and wherein the predictive model generator (210) is configured to identify a relationship between the vegetative index values and the weed characteristic based on the weed characteristic value detected at the geographic location and the vegetative index value, in the vegetative index map, at the geographic location, the predictive agricultural model being configured to receive a vegetative index value as a model input and generate a weed characteristic value as a model output based on the identified relationship.

10. The agricultural work machine (100) of claim 6, wherein the prior information map comprises a prior vegetative index map that maps, as the first agricultural characteristic, vegetative index values to the different geographic locations in the field, and wherein the predictive model generator (210) is configured to identify a relationship between the vegetative index values and the weed intensity characteristic based on the weed intensity value detected at the geographic location and the vegetative index value, in the vegetative index map, at the geographic location, the predictive agricultural model being configured to receive a vegetative index value as a model input and generate a weed intensity value as a model output based on the identified relationship.

11. The agricultural work machine (100) of claim 7, wherein the prior information map comprises a prior vegetative index map that maps, as the first agricultural characteristic, vegetative index values to the field and wherein the predictive model generator (210) is configured to identify a relationship between the vegetative index values and the weed type characteristic based on the weed type value detected at the geographic location and the vegetative index value, in the vegetative index map, at the geographic location, the predictive agricultural model being configured to receive a vegetative index value as a model input and generate a weed type value as a model output based on the identified relationship.

12. A computer implemented method of generating a functional predictive agricultural map, comprising:
receiving a prior information map, at an agricultural work machine (100), that indicates values of a first agricultural characteristic corresponding to different geographic locations in a field;
detecting a geographic location of the agricultural work machine (100);
detecting, with an in-situ sensor (208), a value of a second agricultural characteristic which is different from the first agricultural characteristic, corresponding to the geographic location; and
generating a predictive agricultural model that models a relationship between the first agricultural characteristic and the second agricultural characteristic;
**characterized by** controlling a predictive map generator (212) to generate the functional predictive agricultural map of the field, that maps predictive values of the second agricultural characteristic to the different locations in the field based on the values of the first agricultural characteristic in the prior information map and the predictive agricultural model.

13. The computer implemented method of claim 12, and further comprising:
configuring the functional predictive agricultural map for a control system (214) that generates control signals to control a controllable subsystem (216) on the agricultural work machine (100) based on the functional predictive agricultural map.

14. The computer implemented method of claim 12, wherein detecting, with an in-situ sensor (208), a value of the second agricultural characteristic comprises detecting a weed characteristic corresponding to the geographic location, and wherein receiving the prior information map comprises receiving a prior vegetative index map that maps, as the first agricultural characteristic, vegetative index values to the different geographic locations in the field, wherein detecting the weed characteristic preferably comprises detecting a weed intensity characteristic value indicative of an intensity of weeds at the geographic location and/or wherein receiving a prior information map comprises receiving a prior information map generated from a prior operation performed in the field, wherein generating a predictive agricultural model preferably comprises identifying a relationship between the vegetative index values and the weed characteristic based on the weed characteristic detected at the geographic location and the vegetative index value, in the vegetative index map, at the geographic location; and controlling a predictive model generator (210) to generate the predictive agricultural model that receives a vegetative index value as a model input and generates a weed characteristic value as a model output based on the identified relationship, preferably further comprising controlling an operator interface mechanism to present the functional predictive agricultural map.

## Patentansprüche

1. Landwirtschaftliche Arbeitsmaschine (100), die Folgendes umfasst:
ein Kommunikationssystem (206), das konfiguriert ist, eine Karte vorheriger Informationen zu empfangen, die Werte einer ersten landwirtschaftlichen Eigenschaft enthält, die verschiedenen geografischen Orten in einem Feld entsprechen;
einen Sensor für eine geografische Position (204), der konfiguriert ist, einen geografischen Ort der landwirtschaftlichen Arbeitsmaschine (100) zu detektieren;
einen In-Situ-Sensor (208), der konfiguriert ist, einen Wert einer zweiten landwirtschaftlichen Eigenschaft zu detektieren, die von der ersten landwirtschaftlichen Eigenschaft verschieden ist, die dem geografischen Ort entspricht; und
einen Generator für ein Vorhersagemodell (210), der konfiguriert ist, ein landwirtschaftliches Vorhersagemodell zu erzeugen, das eine Beziehung zwischen der ersten landwirtschaftlichen Eigenschaft und der zweiten landwirtschaftlichen Eigenschaft anhand eines Werts der ersten landwirtschaftlichen Eigenschaft in der Karte vorheriger Informationen an dem geografischen Ort und eines Werts der zweiten landwirtschaftlichen Eigenschaft, der durch den In-Situ-Sensor (208) an dem geografischen Ort erfasst wird, modelliert;
**gekennzeichnet durch** einen Generator für eine Vorhersagekarte (212), der konfiguriert ist, eine funktionale landwirtschaftliche Vorhersagekarte des Feldes zu erzeugen, die Vorhersagewerte der zweiten landwirtschaftlichen Eigenschaft auf die verschiedenen geografischen Orte in dem Feld anhand der Werte der ersten landwirtschaftlichen Eigenschaft in der Karte vorheriger Informationen und anhand des landwirtschaftlichen Vorhersagemodells abbildet.

2. Landwirtschaftliche Arbeitsmaschine (100) nach Anspruch 1, wobei der Generator für eine Vorhersagekarte (212) konfiguriert ist, die funktionale landwirtschaftliche Vorhersagekarte für einen Verbrauch durch ein Steuersystem (214) zu konfigurieren, das Steuersignale erzeugt, um ein steuerbares Untersystem (216) auf der landwirtschaftlichen Arbeitsmaschine (100) anhand der funktionalen landwirtschaftlichen Vorhersagekarte zu steuern.

3. Landwirtschaftliche Arbeitsmaschine (100) nach Anspruch 1, wobei der In-Situ-Sensor (208) auf der landwirtschaftlichen Arbeitsmaschine (100) konfiguriert ist, als den Wert der zweiten landwirtschaftlichen Eigenschaft eine Unkrauteigenschaft zu detektieren, die dem geografischen Ort entspricht.

4. Landwirtschaftliche Arbeitsmaschine (100) nach Anspruch 3, wobei der In-Situ-Sensor (208) Folgendes umfasst:
einen Bilddetektor (336), der konfiguriert ist, ein Bild zu detektieren, das die Unkrauteigenschaft angibt.

5. Landwirtschaftliche Arbeitsmaschine (100) nach Anspruch 4, wobei der Bilddetektor (336) so ausgerichtet ist, dass er ein Bild in der Nähe der landwirtschaftlichen Arbeitsmaschine (100) detektiert, und ferner Folgendes umfasst:
ein Bildverarbeitungssystem (338), das konfiguriert ist, das Bild zu verarbeiten, um die Unkrauteigenschaft in dem Bild zu identifizieren.

6. Landwirtschaftliche Arbeitsmaschine (100) nach Anspruch 3, wobei der In-Situ-Sensor (208) konfiguriert ist, ein Sensorsignal zu erzeugen, das die Unkrauteigenschaft angibt, und ferner Folgendes umfasst:
ein Verarbeitungssystem (338), das das Sensorsignal empfängt und konfiguriert ist, als die Unkrauteigenschaft einen Unkrautstärkewert zu identifizieren, der ein Ausmaß von Unkraut an dem geografischen Ort angibt.

7. Landwirtschaftliche Arbeitsmaschine (100) nach Anspruch 3, wobei der In-Situ-Sensor (208) konfiguriert ist, ein Sensorsignal zu erzeugen, das die Unkrauteigenschaft angibt, und ferner Folgendes umfasst:
ein Verarbeitungssystem (338), das das Sensorsignal empfängt und konfiguriert ist, als die Unkrauteigenschaft einen Unkrauttypeigenschaftswert zu identifizieren, der einen Typ von Unkraut an dem geografischen Ort angibt.

8. Landwirtschaftliche Arbeitsmaschine (100) nach Anspruch 5, wobei der Bilddetektor (336) konfiguriert ist, ein Bild aufzunehmen, dass mindestens einen Unkrautsamen enthält, der durch die landwirtschaftliche Arbeitsmaschine (100) verarbeitet wurde, und wobei das Bildverarbeitungssystem (338) konfiguriert ist, anhand des Bildes des mindestens einen Unkrautsamens einen Unkrautstärkewert, der ein Ausmaß von Unkraut an dem geografischen Ort angibt, oder einen Unkrauttypwert, der einen Typ von Unkraut an dem geografischen Ort angibt, zu identifizieren.

9. Landwirtschaftliche Arbeitsmaschine (100) nach Anspruch 3, wobei die Karte vorheriger Informationen eine Karte vorheriger vegetativer Indizes umfasst, die als die erste landwirtschaftliche Eigenschaft Werte eines vegetativen Indexes auf die verschiedenen geografischen Orte in dem Feld abbildet, und wobei der Generator für ein Vorhersagemodell (210) konfiguriert ist, eine Beziehung zwischen den Werten des vegetativen Indexes und der Unkrauteigenschaft anhand des Unkrauteigenschaftswerts, der an dem geografischen Ort detektiert wird, und des erst des vegetativen Indexes in der Karte vegetativer Indizes an dem geografischen Ort zu identifizieren, wobei das landwirtschaftliche Vorhersagemodell konfiguriert ist, einen Wert eines vegetativen Indexes als eine Modelleingabe zu empfangen und einen Unkrauteigenschaftswert anhand der identifizierten Beziehung als eine Modellausgabe zu erzeugen.

10. Landwirtschaftliche Arbeitsmaschine (100) nach Anspruch 6, wobei die Karte vorheriger Informationen eine Karte vorheriger vegetativer Indizes umfasst, die als die erste landwirtschaftliche Eigenschaft Werte vegetativer Indizes auf die verschiedenen geografischen Orte in dem Feld abbildet, und wobei der Generator für ein Vorhersagemodell (210) konfiguriert ist, eine Beziehung zwischen den Werten vegetativer Indizes und der Unkrautstärkeeigenschaft anhand des Unkrautstärkewerts, der an dem geografischen Ort detektiert wird, und des Werts des vegetativen Indexes in der Karte vegetativer Indizes an dem geografischen Ort zu identifizieren, wobei das landwirtschaftliche Vorhersagemodell konfiguriert ist, einen Wert eines vegetativen Indexes als eine Modelleingabe zu empfangen und einen Unkrautstärkewert anhand der identifizierten Beziehung als eine Modellausgabe zu erzeugen.

11. Landwirtschaftliche Arbeitsmaschine (100) nach Anspruch 7, wobei die Karte vorheriger Informationen eine Karte vorheriger vegetativer Indizes umfasst, die als die erste landwirtschaftliche Eigenschaft Werte vegetativer Indizes auf das Feld abbildet, und wobei der Generator für ein Vorhersagemodell (210) konfiguriert ist, eine Beziehung zwischen den Werten vegetativer Indizes und der Unkrauttypeigenschaft anhand des Unkrauttypwerts, der an dem geografischen Ort detektiert wird, und des Werts des vegetativen Indexes in der Karte vegetativer Indizes an dem geografischen Ort zu identifizieren, wobei das landwirtschaftliche Vorhersagemodell konfiguriert ist, einen Wert eines vegetativen Indexes als eine Modelleingabe zu empfangen und einen Unkrauttypwert anhand der identifizierten Beziehung als eine Modellausgabe zu erzeugen.

12. Computerimplementiertes Verfahren zum Erzeugen einer funktionalen landwirtschaftlichen Vorhersagekarte, das Folgendes umfasst:
Empfangen einer Karte vorheriger Informationen an einer landwirtschaftlichen Arbeitsmaschine (100), die Werte einer ersten landwirtschaftlichen Eigenschaft angibt, die verschiedenen geografischen Orten in einem Feld entsprechen;
Detektieren eines geografischen Orts der landwirtschaftlichen Arbeitsmaschine (100);
Detektieren mit einem In-Situ-Sensor (208) eines Werts einer zweiten landwirtschaftlichen Eigenschaft, die von der ersten landwirtschaftlichen Eigenschaft verschieden ist, die dem geografischen Ort entspricht; und
Erzeugen eines landwirtschaftlichen Vorhersagemodells, das eine Beziehung zwischen der ersten landwirtschaftlichen Eigenschaft und der zweiten landwirtschaftlichen Eigenschaft modelliert;
**gekennzeichnet durch** Steuern eines Generators für eine Vorhersagekarte (212), die funktionale landwirtschaftliche Vorhersagekarte des Feldes zu erzeugen, die Vorhersagewerte der zweiten landwirtschaftlichen Eigenschaft auf die verschiedenen Orte in dem Feld anhand der Werte der ersten landwirtschaftlichen Eigenschaft in der Karte vorheriger Informationen und des landwirtschaftlichen Vorhersagemodells abbildet.

13. Computerimplementiertes Verfahren nach Anspruch 12 und das ferner Folgendes umfasst:
Konfigurieren der funktionalen landwirtschaftlichen Vorhersagekarte für eine Steuersystem (214), das
Steuersignale erzeugt, um ein steuerbares Untersystem (216) auf der landwirtschaftlichen Arbeitsmaschine (100) anhand der funktionalen landwirtschaftlichen Vorhersagekarte zu steuern.

14. Computerimplementiertes Verfahren nach Anspruch 12, wobei das Detektieren mit einem In-Situ-Sensor (208) eines Werts der zweiten landwirtschaftlichen Eigenschaft umfasst, eine Unkrauteigenschaft zu detektieren, die dem geografischen Ort entspricht, und wobei das Empfangen der Karte vorheriger Informationen umfasst, eine Karte vorheriger vegetativer Indizes zu empfangen, die als die erste landwirtschaftliche Eigenschaft Werte eines vegetativen Indexes auf die verschiedenen geografischen Orte in dem Feld abbildet, wobei das Detektieren der Unkrauteigenschaft vorzugsweise umfasst, einen Unkrautstärkeeigenschaftswert zu detektieren, der ein Ausmaß von Unkraut an dem geografischen Ort angibt, und/oder wobei das Empfangen einer Karte vorheriger Informationen umfasst, eine Karte vorheriger Informationen zu empfangen, die aus einem vorherigen Vorgang erzeugt wird, der in dem Feld ausgeführt wird, wobei das Erzeugen eines landwirtschaftlichen Vorhersagemodells vorzugsweise umfasst, eine Beziehung zwischen den Werten vegetativer Indizes und der Unkrauteigenschaft anhand der an dem geografischen Ort detektierten Unkrauteigenschaft und des Werts des vegetativen Indexes in der Karte vegetativer Indizes an dem geografischen Ort zu identifizieren; und das Steuern eines Generators für ein Vorhersagemodell (210), das landwirtschaftliche Vorhersagemodell zu erzeugen, das einen Wert eines vegetativen Indexes als eine Modelleingabe empfängt und anhand der identifizierten Beziehung einen Unkrauteigenschaftswert als eine Modellausgabe erzeugt, vorzugsweise ferner umfasst, einen Bedienerschnittstellenmechanismus zu steuern, die funktionale landwirtschaftliche Vorhersagekarte darzustellen.

## Revendications

1. Machine de travail agricole (100), comprenant :
un système de communication (206) configuré pour recevoir une carte d'informations antérieure qui inclut des valeurs d'une première caractéristique agricole correspondant à des localisations géographiques différentes dans un champ ;
un capteur de position géographique (204) configuré pour détecter une localisation géographique de la machine de travail agricole (100) ;
un capteur in situ (208) configuré pour détecter une valeur d'une deuxième caractéristique agricole, qui est différente de la première caractéristique agricole, correspondant à la localisation géographique ; et
un générateur de modèle prédictif (210) configuré pour générer un modèle agricole prédictif qui modélise une relation entre la première caractéristique agricole et la deuxième caractéristique agricole sur la base d'une valeur de la première caractéristique agricole dans la carte d'informations antérieure au niveau de la localisation géographique et d'une valeur de la deuxième caractéristique agricole détectée par le capteur in situ (208) au niveau de la localisation géographique ;
**caractérisé par** un générateur de carte prédictif (212) configuré pour générer une carte agricole prédictive fonctionnelle du champ, qui cartographie des valeurs prédictives de la deuxième caractéristique agricole sur les différentes localisations géographiques dans le champ, sur la base des valeurs de la première caractéristique agricole dans la carte d'informations antérieure et sur la base du modèle agricole prédictif.

2. Machine de travail agricole (100) selon la revendication 1, le générateur de carte prédictif (212) étant configuré pour configurer la carte agricole prédictive fonctionnelle pour une consommation par un système de contrôle (214) qui génère des signaux de contrôle pour contrôler un sous-système contrôlable (216) sur la machine de travail agricole (100) sur la base de la carte agricole prédictive fonctionnelle.

3. Machine de travail agricole (100) selon la revendication 1, le capteur in situ (208) sur la machine de travail agricole (100) étant configuré pour détecter, en tant que valeur de la deuxième caractéristique agricole, une caractéristique d'adventice correspondant à la localisation géographique.

4. Machine de travail agricole (100) selon la revendication 3, le capteur in situ (208) comprenant :
un détecteur d'images (336) configuré pour détecter une image indiquant la caractéristique d'adventice.

5. Machine de travail agricole (100) selon la revendication 4, le détecteur d'images (336) étant orienté pour détecter une image à proximité de la machine de travail agricole (100) et comprenant en outre :
un système de traitement d'images (338) configuré pour traiter l'image afin d'identifier la caractéristique d'adventice dans l'image.

6. Machine de travail agricole (100) selon la revendication 3, le capteur in situ (208) étant configuré pour générer un signal de capteur indiquant la caractéristique d'adventice et comprenant en outre :
un système de traitement (338) qui reçoit le signal de capteur et qui est configuré pour identifier, en tant que caractéristique d'adventice, une valeur d'intensité d'adventice indiquant une intensité des adventices au niveau de la localisation géographique.

7. Machine de travail agricole (100) selon la revendication 3, le capteur in situ (208) étant configuré pour générer un signal de capteur indiquant la caractéristique d'adventice et comprenant en outre :
un système de traitement (338) qui reçoit le signal de capteur et qui est configuré pour identifier, en tant que caractéristique d'adventice, une valeur de caractéristique de type d'adventice indiquant un type d'adventices au niveau de la localisation géographique.

8. Machine de travail agricole (100) selon la revendication 5, le détecteur d'images (336) étant configuré pour capturer une image qui inclut au moins une graine d'adventice traitée par la machine de travail agricole (100) et le système de traitement d'images (338) étant configuré pour identifier une valeur d'intensité d'adventice, indiquant une intensité des adventices au niveau de la localisation géographique, ou une valeur de type d'adventice, indiquant un type d'adventice au niveau de la localisation géographique, sur la base de l'image de la ou des graines d'adventice.

9. Machine de travail agricole (100) selon la revendication 3, la carte d'informations antérieure comprenant une carte d'indice végétatif antérieure qui cartographie, en tant que première caractéristique agricole, des valeurs d'indice végétatif sur les localisations géographiques différentes dans le champ, et le générateur de modèle prédictif (210) étant configuré pour identifier une relation entre les valeurs d'indice végétatif et la caractéristique de graines sur la base de la valeur de caractéristique de graines détectée au niveau de la localisation géographique et de la valeur d'indice végétatif, dans la carte d'indice végétatif, au niveau de la localisation géographique, le modèle agricole prédictif étant configuré pour recevoir une valeur d'indice végétatif en tant qu'entrée de modèle et générer une valeur caractéristique d'adventice en tant que sortie de modèle sur la base de la relation identifiée.

10. Machine de travail agricole (100) selon la revendication 6, la carte d'informations antérieure comprenant une carte d'indice végétatif antérieure qui cartographie, en tant que première caractéristique agricole, des valeurs d'indice végétatif sur les localisations géographiques différentes dans le champ, et le générateur de modèle prédictif (210) étant configuré pour identifier une relation entre les valeurs d'indice végétatif et la caractéristique d'intensité d'adventice sur la base de la valeur d'intensité d'adventice détectée au niveau de la localisation géographique et de la valeur d'indice végétatif, dans la carte d'indice végétatif, au niveau de la localisation géographique, le modèle agricole prédictif étant configuré pour recevoir une valeur d'indice végétatif en tant qu'entrée de modèle et générer une valeur d'intensité d'adventice en tant que sortie de modèle sur la base de la relation identifiée.

11. Machine de travail agricole (100) selon la revendication 7, la carte d'informations antérieure comprenant une carte d'indice végétatif antérieure qui cartographie, en tant que première caractéristique agricole, des valeurs d'indice végétatif sur le champ, et le générateur de modèle prédictif (210) étant configuré pour identifier une relation entre les valeurs d'indice végétatif et la caractéristique de type d'adventice sur la base de la valeur de type d'adventice détectée au niveau de la localisation géographique et de la valeur d'indice végétatif, dans la carte d'indice végétatif, au niveau de la localisation géographique, le modèle agricole prédictif étant configuré pour recevoir une valeur d'indice végétatif en tant qu'entrée de modèle et générer une valeur de type d'adventice en tant que sortie de modèle sur la base de la relation identifiée.

12. Procédé mis en oeuvre par ordinateur de génération d'une carte agricole prédictive fonctionnelle, comprenant :
la réception d'une carte d'informations antérieure, au niveau d'une machine de travail agricole (100), qui indique des valeurs d'une première caractéristique agricole correspondant à des localisations géographiques différentes dans un champ ;
la détection d'une localisation géographique de la machine de travail agricole (100) ;
la détection, avec un capteur in situ (208), d'une valeur d'une deuxième caractéristique agricole, qui est différente de la première caractéristique agricole, correspondant à la localisation géographique ; et
la génération d'un modèle agricole prédictif qui modélise une relation entre la première caractéristique agricole et la deuxième caractéristique agricole ;
**caractérisé par** le contrôle d'un générateur de carte prédictif (212) pour générer la carte agricole prédictive fonctionnelle du champ, qui cartographie des valeurs prédictives de la deuxième caractéristique agricole sur les localisations différentes dans le champ, sur la base des valeurs de la première caractéristique agricole dans la carte d'informations antérieure et du modèle agricole prédictif.

13. Procédé mis en oeuvre par ordinateur selon la revendication 12, et comprenant en outre :
la configuration de la carte agricole prédictive fonctionnelle pour un système de contrôle (214) qui génère des signaux de contrôle pour contrôler un sous-système contrôlable (216) sur la machine de travail agricole (100) sur la base de la carte agricole prédictive fonctionnelle.

14. Procédé mis en oeuvre par ordinateur selon la revendication 12, la détection, avec un capteur in situ (208), d'une valeur de la deuxième caractéristique agricole comprenant la détection d'une caractéristique d'adventice correspondant à la localisation géographique, et la réception de la carte d'informations antérieure comprenant la réception d'une carte d'indice végétatif antérieure qui cartographie, en tant que première caractéristique agricole, des valeurs d'indice végétatif sur les localisations géographiques différentes dans le champ, la détection de la caractéristique d'adventice comprenant de préférence la détection d'une valeur de caractéristique d'intensité d'adventice indiquant une intensité d'adventices au niveau de la localisation géographique et/ou la réception d'une carte d'informations antérieure comprenant la réception d'une carte d'informations antérieure générée à partir d'une opération antérieure exécutée dans le champ, la génération d'un modèle agricole prédictif comprenant de préférence l'identification d'une relation entre les valeurs d'indice végétatif et la caractéristique d'adventice sur la base de la caractéristique d'adventice détectée au niveau de la localisation géographique et de la valeur d'indice végétatif, dans la carte d'indice végétatif, au niveau de la localisation géographique ; et le contrôle d'un générateur de modèle prédictif (210) pour générer le modèle agricole prédictif qui reçoit une valeur d'indice végétatif en tant qu'entrée de modèle et génère une valeur de caractéristique d'adventice en tant que sortie de modèle sur la base de la relation identifiée, comprenant en outre de préférence le contrôle d'un mécanisme d'interface d'opérateur pour présenter la carte agricole prédictive fonctionnelle.
